(19) Europäisches Patentamt
European Patent Office
Office européen des brevets

(11) Publication number: **0 445 764 A2**

(12) **EUROPEAN PATENT APPLICATION**

(21) Application number: **91103395.9**

(51) Int. Cl.$^5$: **G06F 9/44**, G06F 15/40

(22) Date of filing: **06.03.91**

(30) Priority: **07.03.90 JP 53626/90**

(43) Date of publication of application:
**11.09.91 Bulletin 91/37**

(84) Designated Contracting States:
**DE FR GB**

(71) Applicant: **HITACHI, LTD.**
**6, Kanda Surugadai 4-chome**
**Chiyoda-ku, Tokyo 101(JP)**

(72) Inventor: **Mimura, Hirokazu**
**15-2, Higashikawashimacho, Hodogaya-ku**
**Yokohama-shi(JP)**
Inventor: **Takahashi, Noriyuki**
**Hitachi Sakai Shataku 102, 256, Hiraokacho**
**Sakai-shi(JP)**
Inventor: **Takadachi, Masato**
**320-1, Ozenji, Asao-ku**
**Kawasaki-shi(JP)**
Inventor: **Okukawa, Junichi**
**Hitachi Nogendairyo, 31-3,**
**Nishishiba-2-chome**
**Kanazawa-ku, Yokohama-shi(JP)**
Inventor: **Eguchi, Ryoji**
**1374, Suenaga, Takatsu-ku**
**Kawasaki-shi(JP)**

(74) Representative: **Patentanwälte Beetz sen. - Beetz jun. Timpe - Siegfried - Schmitt-Fumian- Mayr**
**Steinsdorfstrasse 10**
**W-8000 München 22(DE)**

(54) **System for managing information in an integrated manner.**

(57) A system for managing information in an integrated manner, comprising an external storage (53) for storing at least one piece of software information including product information (2) on specifications, a program, etc., management information (4) on the quality of products, progress of a work, etc., environment information (6) on a developing machine, a development supporting tool, etc., or organization information (8) on developing personnels, a project, etc.; an external storage (53) for storing information related to those pieces of software information; and a CPU (50) for retrieving the software and related information.

EP 0 445 764 A2

FIG. 1

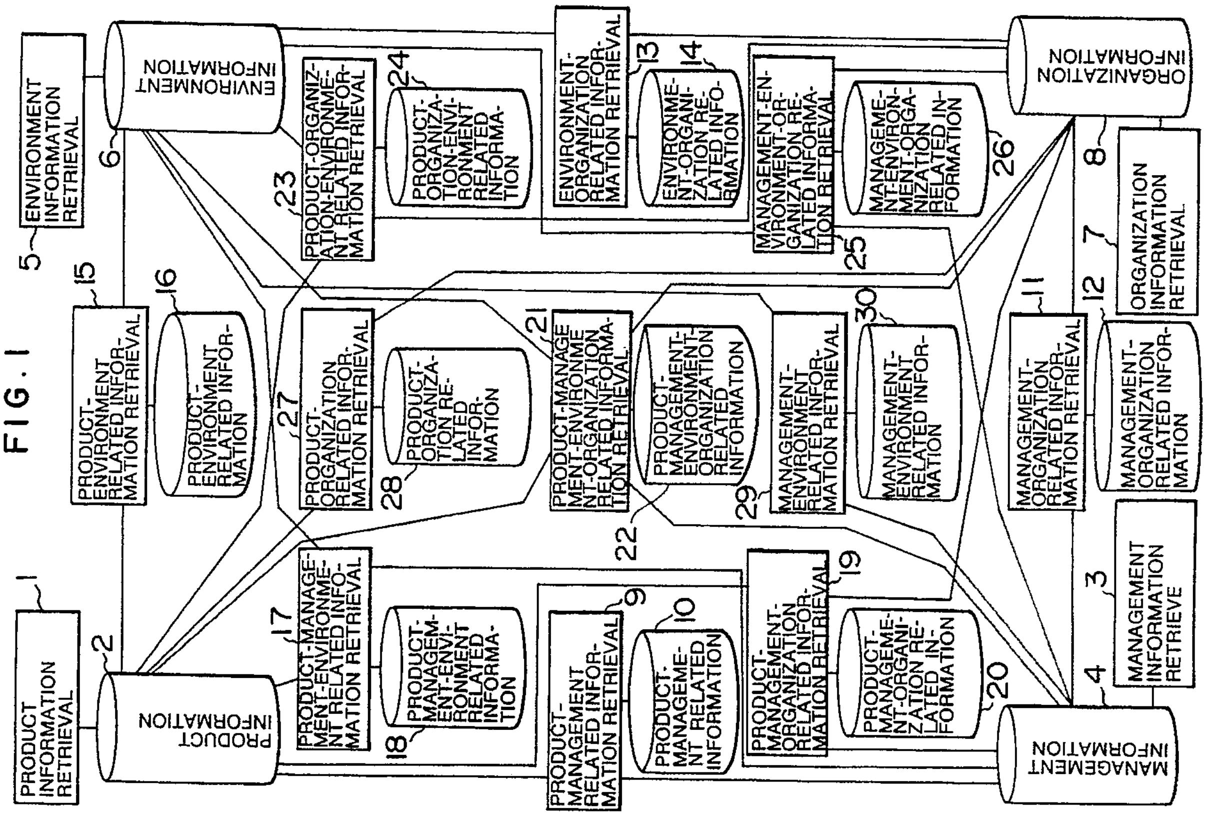
PRODUCT INFORMATION RETRIEVAL
PRODUCT INFORMATION
MANAGEMENT INFORMATION RETRIEVE
MANAGEMENT INFORMATION
ENVIRONMENT INFORMATION RETRIEVAL
ENVIRONMENT INFORMATION
ORGANIZATION INFORMATION RETRIEVAL
ORGANIZATION INFORMATION
PRODUCT-MANAGEMENT RELATED INFORMATION RETRIEVAL
PRODUCT-MANAGEMENT RELATED INFORMATION
MANAGEMENT-ORGANIZATION RELATED INFORMATION RETRIEVAL
MANAGEMENT-ORGANIZATION RELATED INFORMATION
ENVIRONMENT-ORGANIZATION RELATED INFORMATION RETRIEVAL
ENVIRONMENT-ORGANIZATION RELATED INFORMATION
PRODUCT-ENVIRONMENT RELATED INFORMATION RETRIEVAL
PRODUCT-ENVIRONMENT RELATED INFORMATION
PRODUCT-MANAGEMENT-ENVIRONMENT RELATED INFORMATION RETRIEVAL
PRODUCT-MANAGEMENT-ENVIRONMENT RELATED INFORMATION
PRODUCT-MANAGEMENT-ORGANIZATION RELATED INFORMATION RETRIEVAL
PRODUCT-MANAGEMENT-ORGANIZATION RELATED INFORMATION
PRODUCT-MANAGEMENT-ENVIRONMENT-ORGANIZATION RELATED INFORMATION RETRIEVAL
PRODUCT-MANAGEMENT-ENVIRONMENT-ORGANIZATION RELATED INFORMATION
PRODUCT-ORGANIZATION-ENVIRONMENT RELATED INFORMATION RETRIEVAL
PRODUCT-ORGANIZATION-ENVIRONMENT RELATED INFORMATION
MANAGEMENT-ENVIRONMENT-ORGANIZATION RELATED INFORMATION RETRIEVAL
MANAGEMENT-ENVIRONMENT-ORGANIZATION RELATED INFORMATION
PRODUCT-ORGANIZATION RELATED INFORMATION RETRIEVAL
PRODUCT-ORGANIZATION RELATED INFORMATION
MANAGEMENT-ENVIRONMENT RELATED INFORMATION RETRIEVAL
MANAGEMENT-ENVIRONMENT RELATED INFORMATION
1
2
3
4
5
6
7
8
9
10
11
12
13
14
15
16
17
18
19
20
21
22
23
24
25
26
27
28
29
30

## BACKGROUND OF THE INVENTION

The present invention relates to support of the development and maintenance of software, and more particularly to a system for managing information on software generated in the development and maintenance of software and information related to a plurality of pieces of such information in an integrated manner.

As disclosed in JP-A-64-29931, there is a system in which specifications and programs are managed as a unit to maintain the consistency of the specifications and programs. This system includes only product information for software.

As disclosed in JP-A-64-66768, there is a system which manages users and groups hierarchically to prevent an undue change in the access authority. This system includes only information on organization.

As disclosed in JP-A-64-68833, there is a system which manages programs, the frequency of executions of programs, the dates of those executions and extracts programs with the history of executions which coincides with the conditions designated by the user. This system includes information related to product information and management information.

The above-mentioned respective related techniques include only product information, organization information for software, and the information related to the product information and management information and stores none of various information including software development information such as environment information on developing machines, development supporting tools, etc.; information related to product information, organization information and management information; and information related to the organization information and environment information. If tools which support the software development have their required individual pieces of information, there may arise problems in which pieces of information for each tool contradict with one another.

For example, a process management tool stores information related to all pieces of a diagram which includes management information, product information such as that on already prepared programs, and its specifications, and organization information on the personnels who prepared the problems, and discovers which program is delayed in preparation and who is in charge of the delayed program from the stored information.

A development experience tool stores information related to organization information and product information on the dates when product information such as programs were developed and the names of persons who developed the product information and examines the number of programs and the names of the respective personnels who have developed those programs for any particular interval of time.

Information on the date of development of a particular piece of product information and the name of person who developed such piece of product information may differ between process management and development experience examining tools.

As just described above, when similar pieces of informations are stored in tools which support the software development, they may contradict with each other.

When similar pieces of information are stored in the respective tools and used, similar processes must be realized by the corresponding tools.

## SUMMARY OF THE INVENTION

It is an object of the present invention to solve the above subject.

In order to solve the above subject, means are provided which store software information on development and maintenance of software such as product information such as programs and specifications produced in the development and maintenance of software, management information on the quality of products and progress of works, environment information such as developing machines and development supporting tools, organization information on personnels and projects, and information related to those pieces of software information. Means are provided which retrieve the software information and the information related to the software information in a unitary manner.

According to the above mentioned means, management chart comprising the management information, product information on specifications produced already, programs, etc., projects comprising organization information is stored at a single location, and the process management tool and development status review tool refer to the same information, so that the pieces of information output by the respective tools do not contradict with each other.

The respective tools which support the development and maintenance of software are not required to realize the functions of storing and retrieving the pieces of information which they use, so that they are easily developed.

## BRIEF DESCRIPTION OF THE DRAWINGS

Fig. 1 is a block diagram illustrating the structure of a system according to one embodiment of the present invention;

Fig. 2 is a block diagram of a hardware configuration to which the present invention is applied;

Fig. 3 is a flowchart indicative of one embodiment of the procedure of a product-management related information retrieving function 9;

Fig. 4 shows a table indicative of one embodiment of product-management related information 10;

Figs. 5, 7, 9, 10, 12, 13, 15, 17, 18, 20, 21, 22, 24, 26, 27, 29, 30 and 32 each illustrate one embodiment of related information or output data;

Figs. 6, 8, 11, 14, 16, 19, 23, 25, 28 and 31 each are a flowchart indicative of one embodiment of the procedure of the function of retrieving the respective related pieces of information;

Fig. 33 illustrates one example of a work sheet stored as product information;

Figs. 34 - 39 each are a block diagram of another embodiment of the present invention.

## DESCRIPTION OF THE PREFERRED EMBODIMENTS

Embodiments of the present invention will be described in more detial with reference to the drawings. The same reference numeral is used to denote like elements shown through all the drawings and repeated descriptions will be omitted.

Fig. 1 is a block diagram indicative of the structure of a system according to the present invention. Product information 2 is on specifications, programs, etc., prepared by a user at the stage of development and maintenance of software. Management information 4 is on the quality of products, the progress of the works, etc. Environment information 6 is on development machines, development supporting tools, etc. Organization information 8 is on projects and personnels engaged in the development of the programs, etc. For convenience of description the product information, management information, environmental information or organization information is referred to as software information. Product-management related information retrieving function 9 stores and retrieves information related to product information 2 and management information 4 as product-management related information 10. As a specified example, there is information related to specifications and the quality of the specifications. Management-organization related information retrieving function 11 stores, retrieves and manages as management-organization related information 12 information related to management information 4 and organization information 8. As a specified example, there is information related to each project and the developing capability of that project. In Fig. 1, the numerals 13, 15, 17, 19, 21, 23, 25, 27 and 29 each denote the function of retrieving related information. The numerals 14, 16, 18, 20, 22, 24, 26, 28 and 30 each denote related information stored.

Fig. 2 shows a hardware configuration to which the present invention is applied. The numeral 50 denotes a central processing unit (CPU) which performs the processing described in detail below; 51, a memory or main storage which stores programs and data required for processing; 52, an input unit which generally shows appropriate input means such as a keyboard and a mouse; 53, an external storage which stores the various pieces of information; and 54, a display which displays for the operator the results of the processing, including retrieval, which will be described in more detail below.

Fig. 3 is a flowchart indicative of one embodiment of the procedure of product-management related information retrieving function 9. Referring to Fig. 3, product-management related information retrieving function 9 which constitutes part of the present invention will be described.

In the present embodiment, product-management related information 10 shown in Fig. 4 is used to output a table of debugged state shown in Fig. 5 to grasp the progress of debugging. The related information takes the form of a table of program name, the number of steps of the program, the target number of bugs picked out, the actual number of bugs picked out and the prodcut status. The name and number of steps of the program, and the product status are product information, and the target number of bugs picked out calculated from the number of steps, and the actual number of bugs picked out and debugged actually in the program are information on quality or management information. The product status is a parameter indicative of the degree of completion of the product. If the value is "completed", the program is completed while if it is "incompleted", the program is not completed.

First, product-management related information retrieving function 9 receives a request for retrieving the degree of debugging of a program and retrieves one piece of data from the table of product-management related information 10 (101). If there is unretrieved data (102, NO), the product status is searched (103). If the product status is "completed", debugging is terminated. Therefore, the next data is retrieved (101). Unless the program is completed (103, YES), the debug experience value including the actual number of bugs picked-out/the target number of bugs picked-out is calculated (104). The remaining number of bugs which is the target number of bugs picked-out minus the actual number of bugs picked-out is calculated (105). The debug experience value, remaining number of bugs, and program name are written into the debug state table on memory 51 or external storage 53 (106).

The next one piece of data is retrieved from the table of product-management related information 10 (101). If there are no unretrieved data (102, YES), the debug state table is output and the processing is terminated (107).

Fig. 6 is a flowchart indicative of one embodiment of the procedure of management-organization related information retrieving function 11. Referring to Fig. 6, management-organization related information retrieving function 11 constituting part of the present invention will be described.

In the present embodiment, management-organization related information 12 shown in Fig. 7 is used to output an example of a worker's mistake in the past as a message to cause the worker to arouse his attention on his work. The related information takes the form of a table including the worker's name, example of his mistake in the past, and the class of his work. The worker's name and the example of his mistake in the past are organization information and the class of the work for the example of his past mistake are management information.

First, management-organization related information retrieving function 11 receives a request for retrieving examples of worker's mistakes in the past in a class of works and an input on the worker's name and the class of works (200). One piece of data is retrieved from the table of management-organization related information 12 (201). If there is unretrieved data (202, NO), it is examined whether the worker's name of the retrieved data is the input worker's name or not (203), and whether the class of work for the retrieved data is the input class of work or not (204). If the worker's name of the retrieved data is not the input worker's name (203) or if the class of work of the retrieved data is not the input class of work (204), processing of this data is terminated and the next piece of data is retrieved (201).

If the class of work of the retrieved data is the input class of work (203) and simultaneously, the class of work of the retrieved data is the input class of work (204), an example of mistakes in the past is output (205).

One piece of data is then retrieved (201). If there are no unretrieved data (202, YES), the processing is terminated.

Fig. 8 is a flowchart indicative of one embodiment of the procedure of environment-organization related information retrieving function 13. Referring to Fig. 8, environment-organization related information retrieving function 13 constituting part of the present invention will be described.

In the present embodiment, a table of environment-organization related information 14 shown in Fig. 9 is used to output a table of computer use times of Fig. 10 to examine the use rate of the computer. The table includes computer's name, project's name, member's name, work start time, and work end time. The project name and, the member's name of the project are organization information, and the computer name used by the member, work start time and work end time involving the use of the corresponding computer are environmental information.

Environment-organization related information retrieving function 13 receives a request for retrieving a computer use time in a particular interval of time, and a project name and a computer use interval of time are input (300).

One piece of data is then retrieved from the table of environment-organization related information 14 (301). If there is unretrieved data (302, NO), it is determined whether the start time and end time of computer use on the retrieved data are within the input computer use interval of time (303). It is then determined whether the project name of the retrieved data is the input project name or not (304). If the start time and end time of computer use on the retrieved data are not within the input computer use interval of time (303, NO) or if the project name of the retrived data is not the input project name (304, NO), the next piece of the data is retrieved (301).

If the retrieved data is within the input computer use interval of time (303, YES) and has the same project name as the input project name (304, YES), the computer use time is calculated by subtracting the time when the use of the computer started from the time when the use of the computer ended (305).

It is examined whether the member's name and computer name of the retrieved data are the same as the member's name and computer name in the computer use time table of Fig. 10 (306). If so (306, YES), the calculated computer use times are summed up (307) and the next piece of data is retrieved (301).

If the member's name and computer name of the retrieved data are different from those of the data in the computer use time table in memory 51 or external storage 53 of Fig. 2 (306, NO), the retrieved data is written into the computer use time table (308). The next piece of data is then retrieved (301). If there is no unretrieved data (302, YES), the computer use time table is outputted (309).

Fig. 11 is a flowchart indicative of one embodiment of the procedure of product-environment related infromation retrieving function 15. Referring to Fig. 11, product-environment related information retrieving function 15 constituting part of the present invention will be described.

In the present embodiment, the table of product-environment related information 16 of Fig. 12 is used to output a table of recompile requests shown in Fig. 13 to search a source program required for recompilation in conjunction with the improved version of the compiler. The present table includes source file names, object file names, compiler names and compiler versions. The source file names and the names of object files including compiled source files are product information while the names of the compilers used for the compilation of the source files and the compiler versions are environment information.

First, product-environment related information retrieving function 15 receives a request for outputting a recompile request list and an input of the name of the compiler newly installed and its version (400).

One piece of data is retrieved from the table of product-environment related information 16 (401). If there is unretrieved data (402, NO), it is checked whether the input compiler name is the same as the compiler name retrieved (403). If the input compiler name is the same as the retrieved compiler name, it is determined whether the input compiler version is newer (larger in value) than the retrieved version (404). If so, the program name of the retrieved data is added to recompilation request list (405) and then the next data is retrieved (401).

The retrieved compiler name is different from the input compiler name (403, NO), or if the retrieved compiler version is newer than or the same as the input compiler version (404, NO), no recompilation is required, so that the next piece of data is retrieved (401). There is no unretrieved data (402, YES), a recompile request list is outputted (406).

Fig. 14 is a flowchart indicative of one embodiment of the procedure of product-management-environment related information retrieving function 17. Referring to Fig. 14, the function 17 constituting part of the present invention will be described.

In the present embodiment, a table of product-management-environment related information 18 shown in Fig. 15 is used to automate the evaluation of products for making the work efficient and to output the table of product-management-environment related information 18. The present table includes specifications, and program name, status, evaluation tool, evaluation result and evaluation time. The specification and program name, status indicative of whether a respective one of specifications and programs is under preparation are product information, the evaluation tool corresponding to the specifications and program is environment information, and the result and date of evaluation by that evaluation tool are management information.

First, product-management-environment related information retrieving function 17 obtains the current time (500). One piece of data is then retrieved from the table of information 18 (501). If there is unretrieved data (502, NO), the status of the retrieved data is checked (503).

If the status is "under preparation" (503, NO), the specifications and program are not completed, so that processing of this case is terminated and the next one piece of data is retrieved (501).

If the status is "authorized" (503, YES), the respective evaluation tools in the pieces of data are started (504). If the evaluation tools output the corresponding results, the results of the evaluation are written into the table of information 18 (505). The time when the results of the evaluation are obtained are also written (506). The next piece of data is then retrieved (501). If there is no unretrieved data (502, YES), the table of information 18 is outputted (507).

Fig. 16 is a flowchart indicative of one embodiment of the procedure of product-management-organization related information retrieving function 19. Referring to Fig. 16, the function 19 constituting part of the present invention will be described.

In the present embodiment, a table of product-management-environment related information 20 of Fig. 17 is used to output a table of progress shown in Fig. 18 to grasp the status of progress of a work. The present table includes a program name, the name of a personnel in charge of this program, the estimated number of steps of the program, man-day, work start date, work end date, the actually performed number of steps, and the actual man-day. The program name, the actually performed number of steps and actual man-day of the program, work start date and work end date are product information, the estimated number of steps and the estimated man-day of the program are management information, and the name of the personnel in charge of that program is organization information.

First, product-management-organization related information retrieving function 19 receives a request for retrieving the progress table and obtains the current date (600).

On piece of data is then retrieved from a table of product-management-organization related information 20 (601). If there is unretrieved data (602, NO), the status and number of steps of a program corresponding to the retrieved data are obtained from product information 2 (603). The status is a value indicative of the degree of completion of the product. The actually performed number of steps in the table is updated with the obtained number of steps (604).

The status is then checked (605). As a result, if the program is completed (605, YES), the actual man-day is determined as being "completed" (615) and the next piece of data is retrieved (601). If the program is not completed (605), the actual man-day is calculated and the result is written into the table (606). The actual man-day is the value comprising the actually performed number of steps divided by the estimated number of steps and multiplied by the estimated man-day.

It is then determined whether the work end date is later than the current date or not (607). If not (607, NO), it is determined whether the estimated man-day is larger than the actual man-day (608). If so (608, YES), the estimated man-day minus the actual man-day is added to the delay of the personnel in charge in the progress table (610), and the next piece of data is retrieved (601). If the estimated man-day is smaller than the actual man-day (608, NO), a required man-day is received from the user (611) and added to the respective delays of the personnels in charge (612), and the next piece of data is retrieved (601).

If the work end date is later than the current data (607, YES), it is determined whether the work start date is earlier than the current date (609). If so (609, NO), the work start data is subtracted from the current date, the number of holidays between the work start date and the current date is subtracted from the result, the actual man-day is subtracted then from the last result, the resulting value is added to the delay of the personnel in charge (613), and the next piece of data is retrieved (601). If the work start date is later than the current date (609, YES), the actual man-day is subtracted from the delay of the personnel in charge (614) and the next piece of data is retrieved (601).

If there is no unretrieved data when the data is retrieved (602, YES), the progress table is outputted (616).

Fig. 19 is a flowchart indicative of one embodiment of the procedure of product-management-environment-organization related information retrieving function 21. Referring to Fig. 19, the function 21 constituting part of the present invention will be described.

In the present embodiment, a table of product-management-environment-organization related information 22 shown in Fig. 20 and a table of management-environment related information 30 shown in Fig. 21 are used to output a salary table shown in Fig. 22 to calculate the salaries of programmers who work at home for their company.

The table of information 22 includes worker's name, class of work, work start date, work end date, source program name, and work station (WS) number. The source program name, work start date and work end date are product information, the class of work is management information, the used WS number is environment information, and the name of the worker who worked is organization information. The table of management-environment related information 30 includes the class of work, hourly pay and tool name. The class of work class and hourly pay for that work are management information and the name of the tool used for that work is environment information.

First, product-management-environment-organization related information retrieving function 21 receives a request for outputting the salary table and an input indicative of the interval of a work to be paid for (700).

One piece of data is then retrieved from the table of product-management-environment-organization related information 22 (701). If there is unretrieved data (702, NO), it is determined whether the work interval of the retrieved data is within the input work interval (703). If it is a pay-free work interval (703, NO), the next piece of data is retrieved (701). If it is within the interval of the work to be paid for (703, YES), the work hours of the retrieved data are calculated (704). The work hours are the work end time minus the work start time. The work class of the retrieved data is retrieved from the work table and a pay for the work is calculated (705).

Data is then written into the salary table as follows. One piece of data is retrieved from the salary table (706). If there is unretrieved data in the salary table (707, NO), it is checked whether the worker's name of the salary table coincides with the worker's name of product-management-environment-organization related information 22 (708). If not (708, NO), the next piece of data of the salary table is retrieved (706). If the worker's name coincides, the product of the calculated work hours and the hourly pay for that retrieved work is added to the corresponding sum of the salary in the salary table (709), and hence data on the salary table is updated. The next piece of data is then retireved from information 22 (701).

If there is no unretrieved data in the salary table (707, YES), the worker's name and the sum of the worker's salary of the retrieved data are written as new data into the salary table (710). The sum of the salary is the product of the work hours (704) and the hourly pay for that work (705). The next piece of data is then retrieved from information 22 (701). If there is no unretrieved data in the table of information 22 (702), the salary table is outputted (711).

Fig. 23 is a flowchart indicative of one embodiment of the procedure of product-environment-organization related information retrieving function 23. Referring to Fig. 23, the function 23 constituting part of the present invention will be described.

In the present embodiment, a table of product-environment-organization related information 24 of Fig. 24 is used to distribute developed products to appropriate persons. The present table includes a product, product status, references, destination, and distribution check. The product and product status indicative of the degree of completion of the product are product information, the reference referred to when the product may produced is environment information, and the name of the destination to which the product is distributed is organization information.

First, product-environment-organization related information retrieving function 23 receives a request for distributing a product and retireves a piece of data from the table of product-environment-organization related information 24 (801). If there is unretrieved data (802, NO), the product status is determined (803). As a result, if the product is not completed (803, NO), it is not distributed, so that data of the next case is retrieved (801). If the product is completed (803, YES), the distribution check is examined to see whether the product is already distributed (804). If so (804, NO), the product is no longer required to be distributed, one piece of data of the next case is retrieved (801). If not (804, YES), the product and related references are sent by electronic mail to the appropriate destination (805). The distribution check is then changed to 1 (unity) and the fact that the product is already distributed is written into the table (806). Data of the next case is then retrieved (801). If there is no unretrieved data (802, YES), the processing ends.

Fig. 25 is a flowchart indicative of one embodiment of the procedure of management-environment-organization related information retrieving function 25. Referring to Fig. 25, the function 25 constituting part of the present invention will be described.

In the present embodiment, a table of management-environment-organization related information 26 of Fig. 26 is used to display on a display screen a developing ability-number of work stations table shown in Fig. 27 as a graph of the correlation between the number of work stations (WSs) per personnel and the working ability in order to improve the working ability. The present table includes a project name, the number of personnels engaged in that project, developing ability, and the number of work stations used. The project name and the number of personnels concerned are organization information, the developing ability represented by the number of developing program steps per development interval for each project is management information, and the number of work stations used in the development is environment information.

The coordinate axes of the development ability-number of work stations table are displayed on the display screen (900).

Management-environment-organization related information retrieving function 25 retrieves one piece or data from the table of information 26 (901). If there is no unretrieved data (902, YES), the processing ends.

If there is unretrieved data (902, NO), the number of work stations per personnel is calculated by dividing the number of work stations of the retrieved data by the number of personnels for that project (903). Data is plotted on the screen with the x-coordinate representing the calculated number of work stations per personnel and with the y-coordinate representing the corresponding developing capability (904). The next data is then retrieved (901).

Fig. 28 is a flowchart indicative of one embodiment of the procedure of product-organization related information retrieving function 27. Referring to Fig. 28, the function 27 constituting part of the present invention will be described.

In the present embodiment, a table of product-organization related information 28 shown in Fig. 29 is used to output a number-of-steps table shown in Fig. 30 to grasp the actual result of the work. The present table includes a program name, the number of steps of the program, the name of a personnel in charge, the work start date, and works end date. The program name, number of steps of the program, the work start date and work end date for preparing that program are product information and the name of the personnel in charge of the program is organization information.

First, product-organization related information retrieving function 27 receives a request for retrieving the number of developing steps in a particular interval of time and an input indicative of a retireve interval (1000).

Function 27 retrieves one piece of data from the table of product-organization related information 28 (1001). If there is unretrieved data (1002, NO), it is determined whether the work start date and the work end date of the retrieved data are in the input interval of time (1003). If not (1003, NO), the next piece of data is retrieved (1001). If so (1003, YES), it is checked whether the name of the personnel in charge is the same as one of the names in the number-of-steps table (1004). If so, the respective numbers of steps are added (1005) and the next piece of data is retrieved (1001). If not (1004, NO), the retireved data is written into the number-of-steps table (1006) and the next piece of data is retrieved (1001). If there is no unretrieved data (1002, YES), the number-of-steps table is outputted (1007)

Fig. 31 is a flowchart indicative of one embodiment of the procedure of management-environment related information retrieving function 29. Referring to Fig. 31, the function 29 constituting part of the present invention will be described.

In the present embodiment, a table of management-environment related information 30 shown in Fig. 32 is used to start up support tools so as to enter directly into work. The present table includes a work name, work sheet name, and tool name. The work name and the name of the work sheet used for that work are management information and the respective names of support tools for those work sheets are environment information. Fig. 33 shows the start-up of a word processor which compiles a "database (DB) examining table" as an example of the work sheet.

Management-environment related information retrieving function 29 receives a request for starting up a work support tool and an input indicative of a work name (1100). One piece of data is then retrieved from the table of management-environment related information 30 (1100). If there is unretrieved data (1102, NO), it is determined whether the work name in the retrieved data is the same as the input work name (1103). If so (1103, YES), the work in this data is designated, so that the support tool in the retrieved data is started up (1109). If not (1103, NO), the next data is retrieved (1101). If there is no unretrieved data (1102, YES), the processing ends.

While in the above embodiment the respective data retrieving functions are provided separately, they may be replaced by a single information retrieving function 31 in Fig. 34. Alternatively, as shown in Fig. 35, they may be replaced by a single information storage of software information and related information 32. Alternatively, as shown in Fig. 36, a single information storage 32 as well as a single data retrieving function 31 may be provided instead.

As shown in Fig. 37, product information 2, management information 4, environment information 6 and organization information 8 may include corresponding pieces of information 34, 36, 38 and 40 and corresponding related separate functions 33, 35, 37 and 39, respectively. Alternatively, as shown in Fig. 38, the respective data retrieving functions of Fig. 37 may be replaced by a single retrieving function 31 in Fig. 38.

While the above embodiment has no function of changing a structure which realizes the present function, structure information 42 which utility 41 handles may include information, which defines an architecture constructed by information to be stored, conditions for storage and the relationship between pieces of information to be stored, as shown in Fig. 39, and the function of changing the structure which the user realizes the present function may be provided.

As described above, according to the present invention, software information on the development and maintenance of software and information related to a combination of a plurality of pieces of software information are stored in a unitary manner and retrieved. Therefore, the respective support tools which support the development and maintenance of software such as process managing tools, development and environment managing tools, etc., share the same information.

The support tools each are not required to have the function of storing and retrieving the respective pieces of software information and information related to the respective pieces of software information. Therefore, they can be easily developed.

The software information designated by the user and the related information can be managed in the structure designated by the user. Therefore, only information which the user requires can be stored to thereby eliminate a space in which unnecessary information would be stored and required information can be retireved efficiently.

## Claims

1. A system for managing information in an integrated manner, comprising:

   means (53) for storing as software information at least one of a plurality of pieces of product information (2) including a program, a sepcification, prepared in the development of software, management information (4) including a quality of a product, a progress of a work, environment information (6) including a developing machine, a development supporting tool, and organization information (8) inclucing number of developing personnels, a project;

   means (10, 12, 14, 16, 18, 20, 22, 24, 26, 28, 30) for storing information related to any selected ones of a plurality of pieces of the software information; and

   means (1, 3, 5, 7, 9, 11, 13, 15, 17, 19, 21, 23, 25, 27, 29) for retrieving the plurality of pieces of the software information and the related information.

2. A system according to claim 1, wherein said storing means (53) includes means provided for each of at least one of the plurality of pieces of the product information (2), the environment information (6), the management information (4) and the organization information (8) for storing that information, the related information includes a combination of any selected ones of the plurality of pieces of the software information, said retrieving means (1, 3, 5, 7, 9, 11, 13, 15, 17, 19, 21, 23, 25, 27, 29) includes means provided for each of the plurality of pieces of the software information for retrieving that software information and means provided for the information related to the combination of said any selected ones of the plurality of pieces of software information for retrieving that related information.

**3.** A system according to claim 1, wherein said storing means (53) includes means provided for each of at least one of the plurality of pieces of the product information (2), the environment information (6), the management information (4) and the organization information (8) for storing that information, the related information includes a combination of any selected ones of the plurality of pieces of the software information, said retrieving means includes a single retrieving means (31).

**4.** A system according to claim 1, wherein said storing means includes a single storage means (32) for storing the plurality of pieces of the software information and the related information wherein said retrieving means (1, 3, 5, 7, 9, 11, 13, 15, 17, 19, 21, 23, 25, 27, 29) includes means provided for each of the plurality of pieces of the software information and the related information includes means (1, 3, 5, 7, 9, 11, 13, 15, 17, 19, 21, 23, 25, 27, 29) for retrieving the corresponding related information.

**5.** A system according to claim 1, wherein said storing means includes a single storage means (32) for storing said software and said related information and said retrieving means includes a single retrieving means (31).

**6.** A system according to claim 1, wherein said storing means includes means provided for each of the plurality of pieces of the software information (2, 4, 6, 8) is combined with its corresponding related information (34, 36, 38, 40) for storing that software information and its related information, and said retrieving means includes means (33, 35, 37, 39) provided for each of the plurality of pieces of the software information for retrieving that software information.

**7.** A system according to claim 1, wherein each of the plurality of pieces of the software information (2, 4, 6, 8) is combined with its corresponding related information (34, 36, 38, 40) and said retrieving means includes a single retrieving means (31).

**8.** A system according to claim 1, further comprising:

means (42, 50, 53) for designating information to be stored from the plurality of pieces of the software and the related information; and

means (42, 50, 53) for designating a structure of a stored information.

**9.** A method for managing information in an integrated manner, comprising steps of:

storing as software information at least one of a plurality of pieces of product information (2) including a program, specifications, prepared in the development of software, management information (4) including a quality of a product, a progress of a work, environment information (6) including a developing machine, a development supporting tool, and organization information (8) including number of developing personnels, a project;

storing a related information related to any selected ones of a plurality of pieces of the software information; and

retrieving the plurality of pieces of the software information and the related information.

FIG. 1

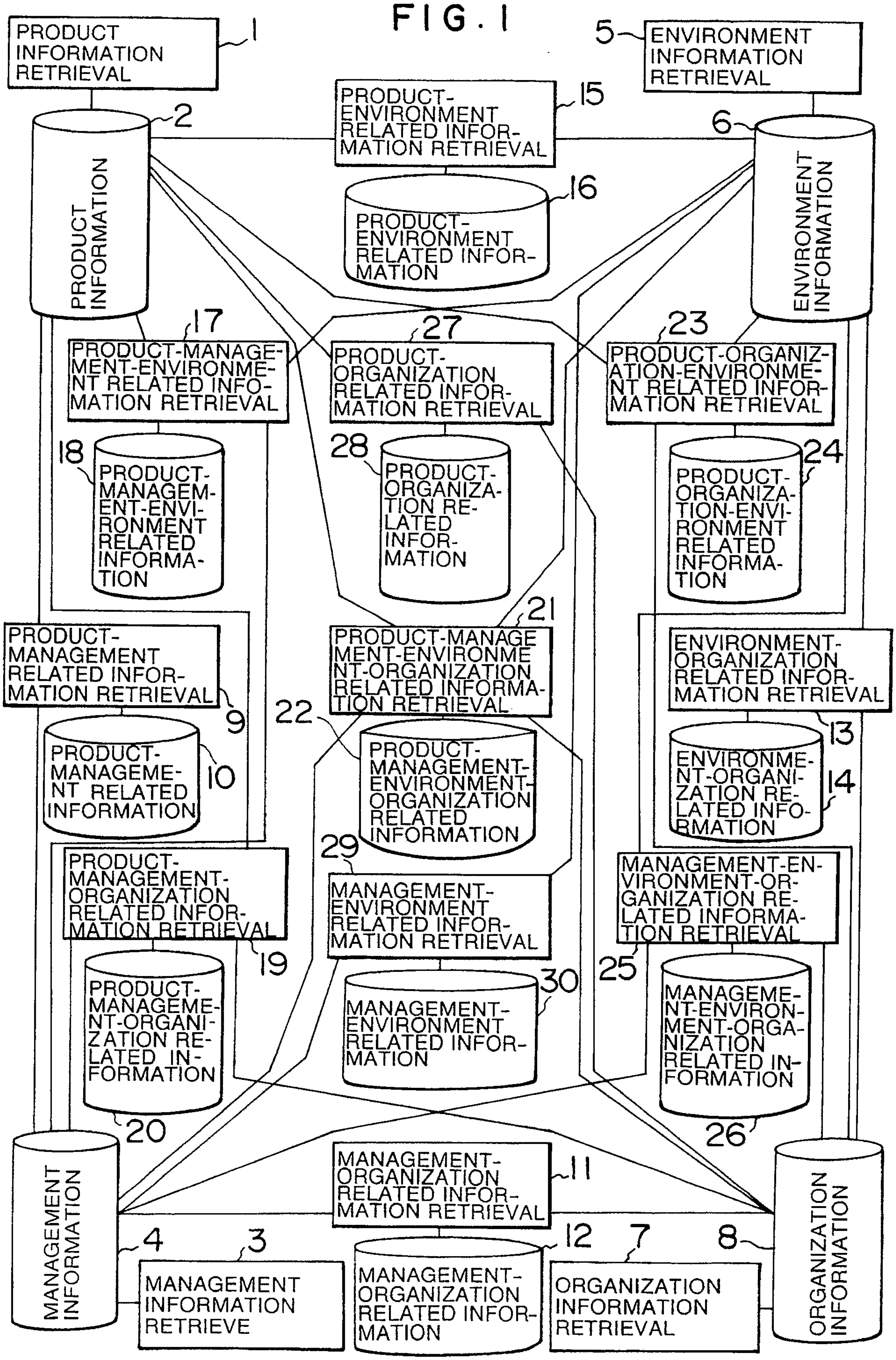
PRODUCT INFORMATION RETRIEVAL
1
ENVIRONMENT INFORMATION RETRIEVAL
5
PRODUCT-ENVIRONMENT RELATED INFORMATION RETRIEVAL
15
2
PRODUCT INFORMATION
6
ENVIRONMENT INFORMATION
PRODUCT-ENVIRONMENT RELATED INFORMATION
16
17
PRODUCT-MANAGEMENT-ENVIRONMENT RELATED INFORMATION RETRIEVAL
27
PRODUCT-ORGANIZATION RELATED INFORMATION RETRIEVAL
23
PRODUCT-ORGANIZATION-ENVIRONMENT RELATED INFORMATION RETRIEVAL
18
PRODUCT-MANAGEMENT-ENVIRONMENT RELATED INFORMATION
28
PRODUCT-ORGANIZATION RELATED INFORMATION
24
PRODUCT-ORGANIZATION-ENVIRONMENT RELATED INFORMATION
21
PRODUCT-MANAGEMENT RELATED INFORMATION RETRIEVAL
9
PRODUCT-MANAGEMENT-ENVIRONMENT-ORGANIZATION RELATED INFORMATION RETRIEVAL
ENVIRONMENT-ORGANIZATION RELATED INFORMATION RETRIEVAL
13
22
PRODUCT-MANAGEMENT RELATED INFORMATION
10
PRODUCT-MANAGEMENT-ENVIRONMENT-ORGANIZATION RELATED INFORMATION
ENVIRONMENT-ORGANIZATION RELATED INFORMATION
14
29
PRODUCT-MANAGEMENT-ORGANIZATION RELATED INFORMATION RETRIEVAL
MANAGEMENT-ENVIRONMENT RELATED INFORMATION RETRIEVAL
MANAGEMENT-ENVIRONMENT-ORGANIZATION RELATED INFORMATION RETRIEVAL
19
25
30
PRODUCT-MANAGEMENT-ORGANIZATION RELATED INFORMATION
MANAGEMENT-ENVIRONMENT RELATED INFORMATION
MANAGEMENT-ENVIRONMENT-ORGANIZATION RELATED INFORMATION
20
26
MANAGEMENT-ORGANIZATION RELATED INFORMATION RETRIEVAL
11
MANAGEMENT INFORMATION
ORGANIZATION INFORMATION
4
3
12
7
8
MANAGEMENT INFORMATION RETRIEVE
MANAGEMENT-ORGANIZATION RELATED INFORMATION
ORGANIZATION INFORMATION RETRIEVAL

FIG. 2

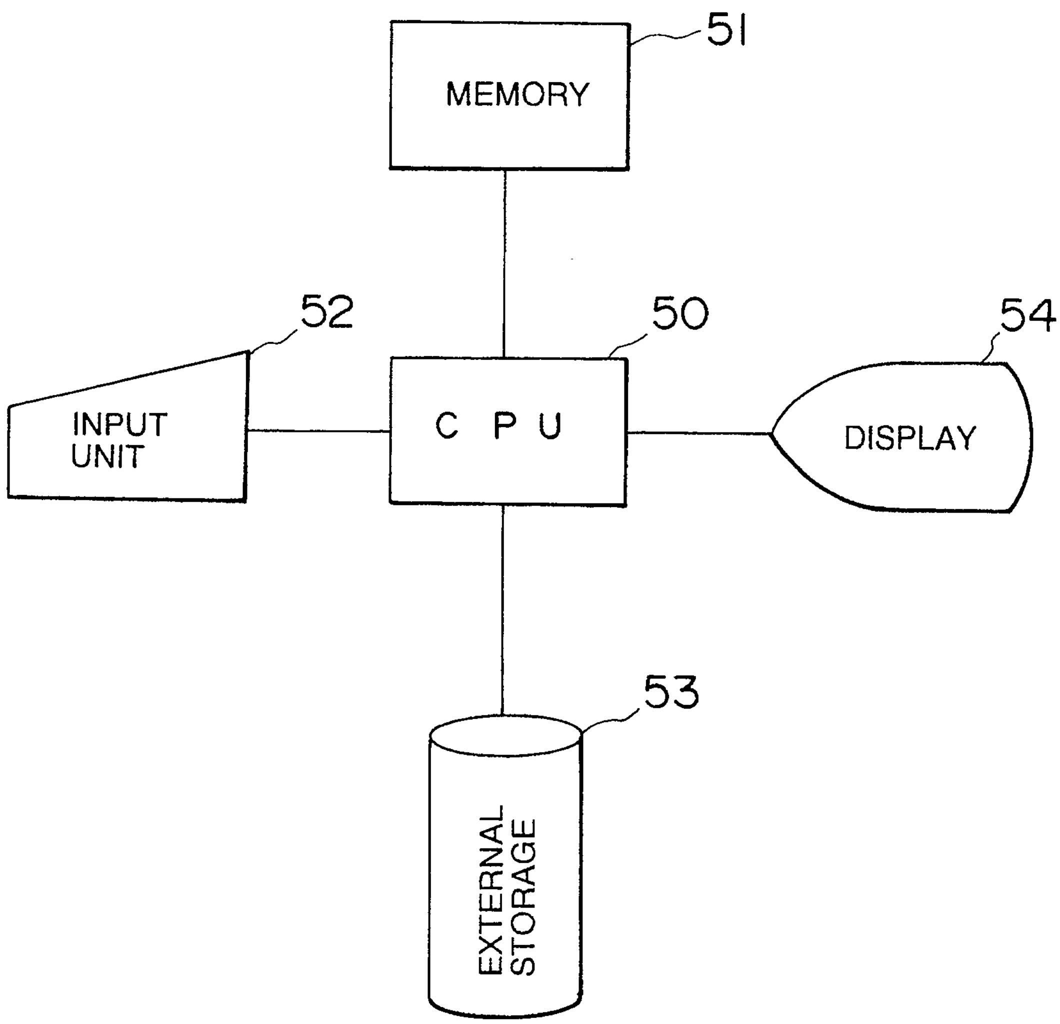
MEMORY
51
52
50
54
INPUT UNIT
C P U
DISPLAY
53
EXTERNAL STORAGE

FIG. 3

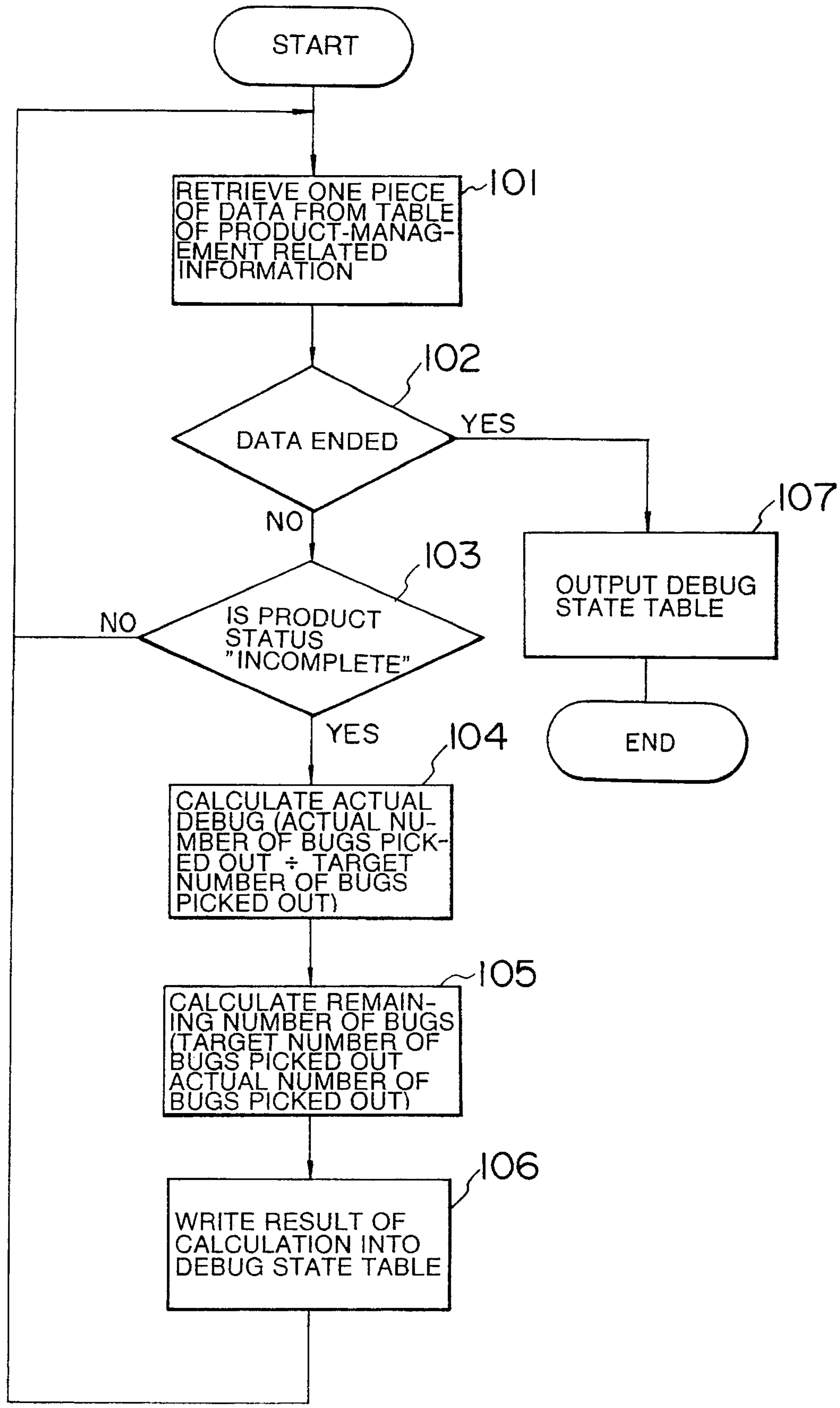
START
RETRIEVE ONE PIECE OF DATA FROM TABLE OF PRODUCT-MANAGEMENT RELATED INFORMATION
101
DATA ENDED
102
YES
NO
IS PRODUCT STATUS "INCOMPLETE"
103
NO
YES
CALCULATE ACTUAL DEBUG (ACTUAL NUMBER OF BUGS PICKED OUT ÷ TARGET NUMBER OF BUGS PICKED OUT)
104
CALCULATE REMAINING NUMBER OF BUGS (TARGET NUMBER OF BUGS PICKED OUT ACTUAL NUMBER OF BUGS PICKED OUT)
105
WRITE RESULT OF CALCULATION INTO DEBUG STATE TABLE
106
OUTPUT DEBUG STATE TABLE
107
END

FIG. 4

10

| PROGRAM NAME | NUMBER OF STEPS | TARGET NUMBER OF BUGS PICKED OUT | ACTUAL NUMBER OF BUGS PICKED OUT | PRODUCT STATUS |
|---|---|---|---|---|
| COUNT. C | 1200 | 40 | 37 | IN-COMPLETE |
| PRGET. C | 1000 | 33 | 19 | IN-COMPLETE |
| ERR. C | 280 | 9 | 5 | IN-COMPLETE |
| REC. C | 910 | 30 | 10 | IN-COMPLETE |

FIG. 5

| PROGRAM NAME | ACTUAL DEBUG | REMAINING NUMBER OF BUGS |
|---|---|---|
| COUNT. C | 93 % | 3 |
| REC. C | 33 | 20 |
| PRGET. C | 58 | 14 |
| ERR. C | 44 | 4 |

FIG. 6

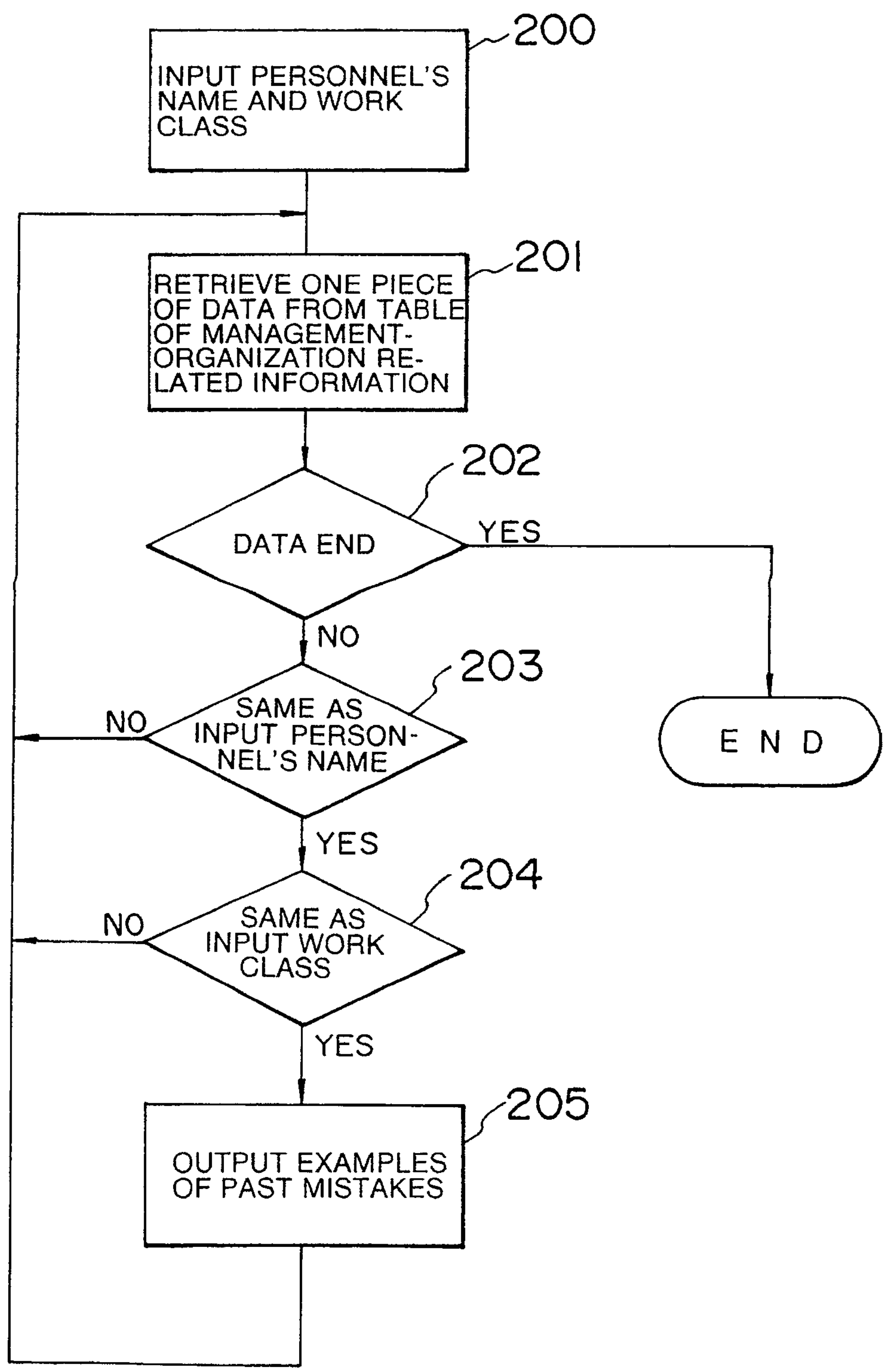
200
INPUT PERSONNEL'S NAME AND WORK CLASS
201
RETRIEVE ONE PIECE OF DATA FROM TABLE OF MANAGEMENT-ORGANIZATION RE-LATED INFORMATION
202
DATA END
YES
NO
203
SAME AS INPUT PERSON-NEL'S NAME
NO
YES
E N D
204
SAME AS INPUT WORK CLASS
NO
YES
205
OUTPUT EXAMPLES OF PAST MISTAKES

FIG. 7

12

| NAME | WORK CLASS | EXAMPLE OF PAST MISTAKE |
|---|---|---|
| SUZUKI | C-PROGRAM CODING | VARIABLES IN WHICH THE TYPES POINTED BY POINTERS DIFFER FROM EACH OTHER WERE CALCULATED AND THUS A COMPILE ERROR OCCURRED |
| SAITOH | C-PROGRAM CODING | WHEN DATA WAS CHANGED, MEMORY ALLOCATING AREA WAS WRONGLY DESIGNATED AND HENCE REOPENING PROGRAM WAS BROKEN |
| OOKI | DB DESIGN | THE NUMBER OF BYTES OF DATA WAS WRONGLY DESIGNED |

FIG. 8

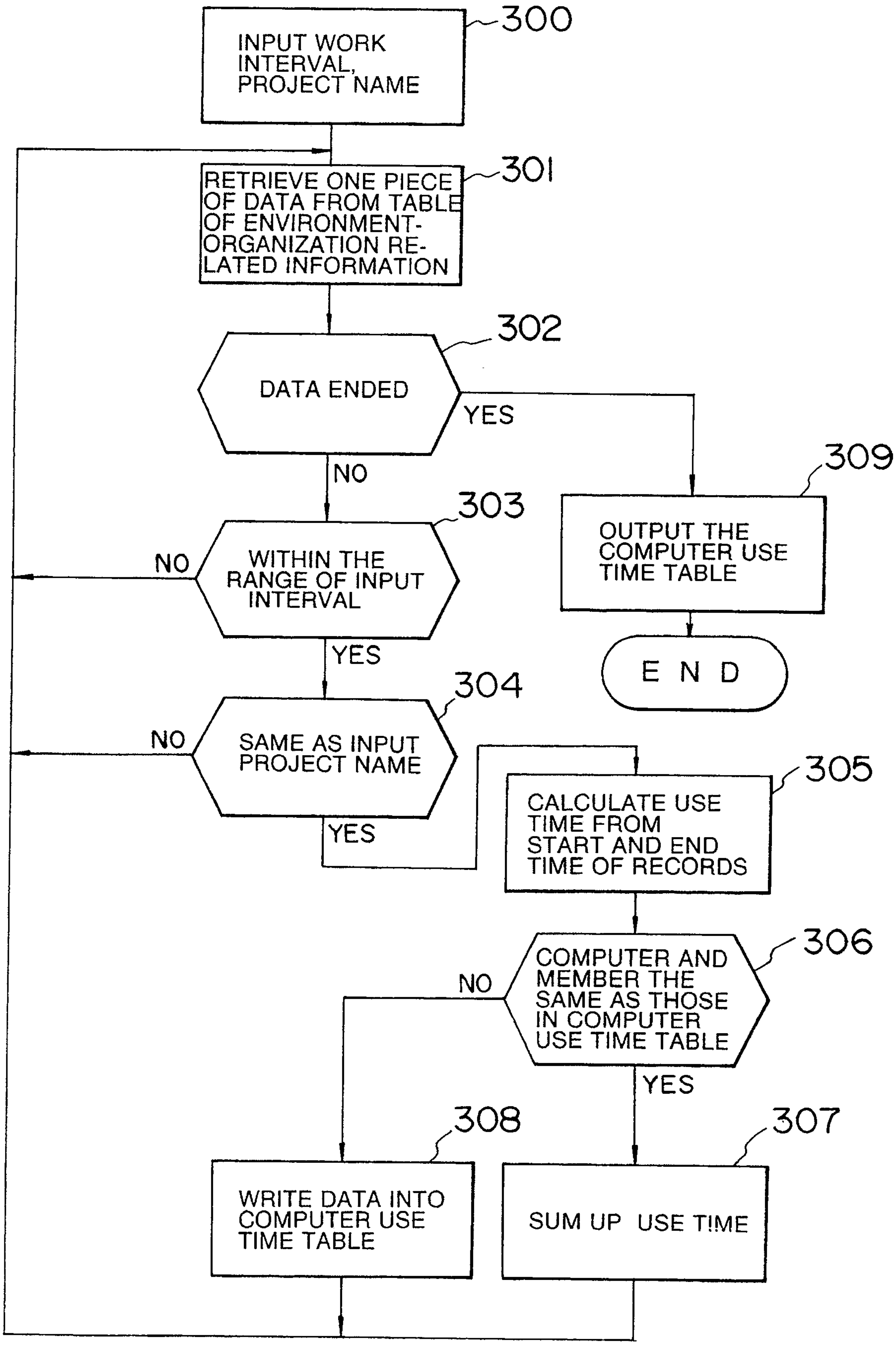
300
INPUT WORK INTERVAL, PROJECT NAME
301
RETRIEVE ONE PIECE OF DATA FROM TABLE OF ENVIRONMENT-ORGANIZATION RELATED INFORMATION
302
DATA ENDED
YES
NO
303
WITHIN THE RANGE OF INPUT INTERVAL
NO
YES
304
SAME AS INPUT PROJECT NAME
NO
YES
305
CALCULATE USE TIME FROM START AND END TIME OF RECORDS
306
COMPUTER AND MEMBER THE SAME AS THOSE IN COMPUTER USE TIME TABLE
NO
YES
308
WRITE DATA INTO COMPUTER USE TIME TABLE
307
SUM UP USE TIME
309
OUTPUT THE COMPUTER USE TIME TABLE
END

FIG. 9

14

| PROJECT | MEMBER | COMPUTER | WORK START TIME | WORK END TIME |
|---|---|---|---|---|
| A BANK P | ABE | 2050-6 | 89.1.5 13:00 | 89.1.5 16:30 |
| A BANK P | SUZUKI | 2050-9 | 88.12.18 9:00 | 88.12.18 12:00 |
| A BANK P | ABE | 2050-6 | 89.2.3 9:30 | 89.2.3 14:00 |
| K BUSSAN P | SATO | 2050-1 | 89.1.3 10:00 | 89.1.3 12:00 |

FIG. 10

| MEMBER | COMPUTER | USE TIME |
|---|---|---|
| ABE | 2050-6 | 8:00 |
| SUZUKI | 2050-9 | 3:00 |

FIG.11

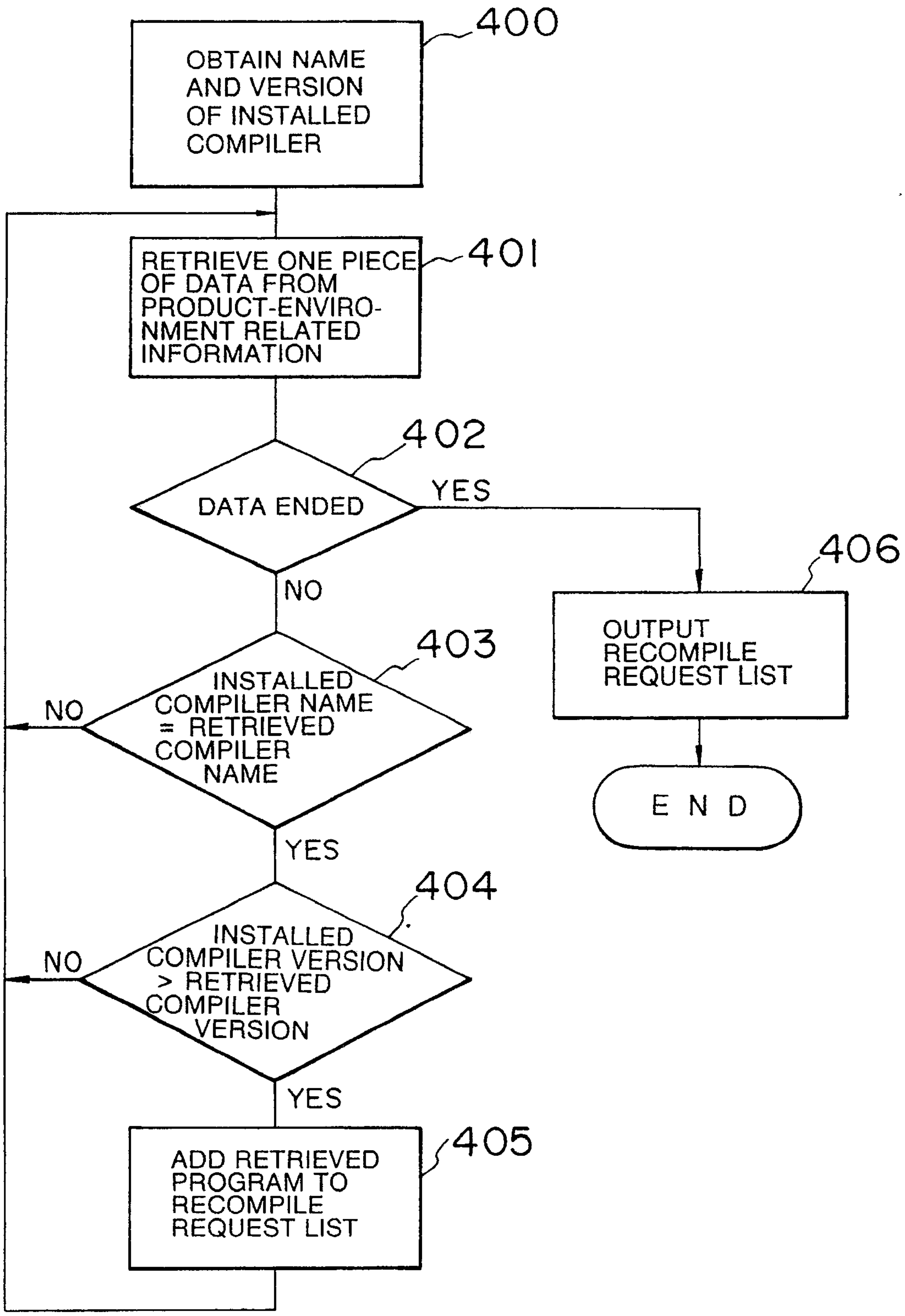
400
OBTAIN NAME AND VERSION OF INSTALLED COMPILER
401
RETRIEVE ONE PIECE OF DATA FROM PRODUCT-ENVIRO-NMENT RELATED INFORMATION
402
DATA ENDED
YES
NO
403
INSTALLED COMPILER NAME = RETRIEVED COMPILER NAME
NO
YES
404
INSTALLED COMPILER VERSION > RETRIEVED COMPILER VERSION
NO
YES
405
ADD RETRIEVED PROGRAM TO RECOMPILE REQUEST LIST
406
OUTPUT RECOMPILE REQUEST LIST
END

FIG. 12

16

| SOURCE FILE NAME | OBJECT FILE NAME | COMPILER NAME | COMPILER VERSION |
|---|---|---|---|
| SORT. C | SORT. O | C | 00-00 |
| MERGE. C | MERGE. O | C | 00-01 |
| SORT. P | SORT. PO | PASCAL | 01-00 |
| TEST. P | TEST. PO | PASCAL | 01-00 |
| GENERATE. C | GENERATE. O | C | 00-00 |

FIG. 13

| SOURCE FILE NAME |
|---|
| SORT. C |
| GENERATE. C |

RECOMPILE REQUEST LIST

FIG. 14

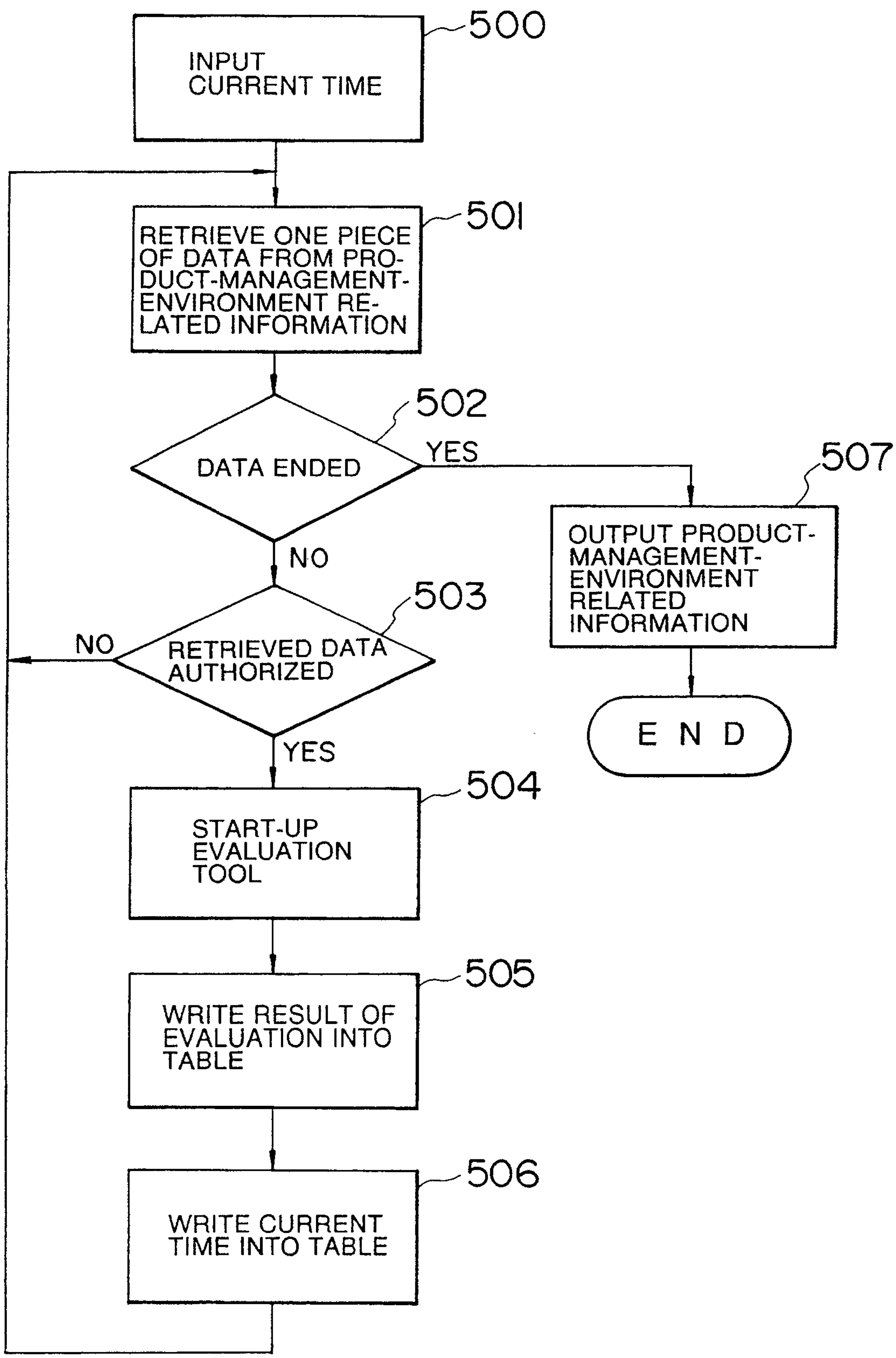
500
INPUT CURRENT TIME
501
RETRIEVE ONE PIECE OF DATA FROM PRODUCT-MANAGEMENT-ENVIRONMENT RELATED INFORMATION
502
DATA ENDED
YES
NO
507
OUTPUT PRODUCT-MANAGEMENT-ENVIRONMENT RELATED INFORMATION
END
503
RETRIEVED DATA AUTHORIZED
NO
YES
504
START-UP EVALUATION TOOL
505
WRITE RESULT OF EVALUATION INTO TABLE
506
WRITE CURRENT TIME INTO TABLE

FIG. 15

18

| SPECIFICATIONS, PROGRAM NAME | STATUS | EVALUATION TOOL | RESULT OF EVALU-ATION | TIME |
| --- | --- | --- | --- | --- |
| DATA FLOW 1 | AUTHO-RIZED | DFD CHECK | BEST | 8:00 JAN. 10 |
| DATA FLOW 2 | AUTHO-RIZED | DFD CHECK | BETTER | 12:00 JAN. 11 |
| SORT | UNDER PREPA-RATION | LINT | GOOD | 17:00 JAN. 17 |
| SORT | UNDER PREPA-RATION | CB | NO GOOD | 17:00 JAN. 17 |
| MERGE | UNDER PREPA-RATION | LIRT | BETTER | 17:00 JAN. 18 |
| MERGE | UNDER PREPA-RATION | CB | BETTER | 18:00 JAN. 18 |

FIG.16

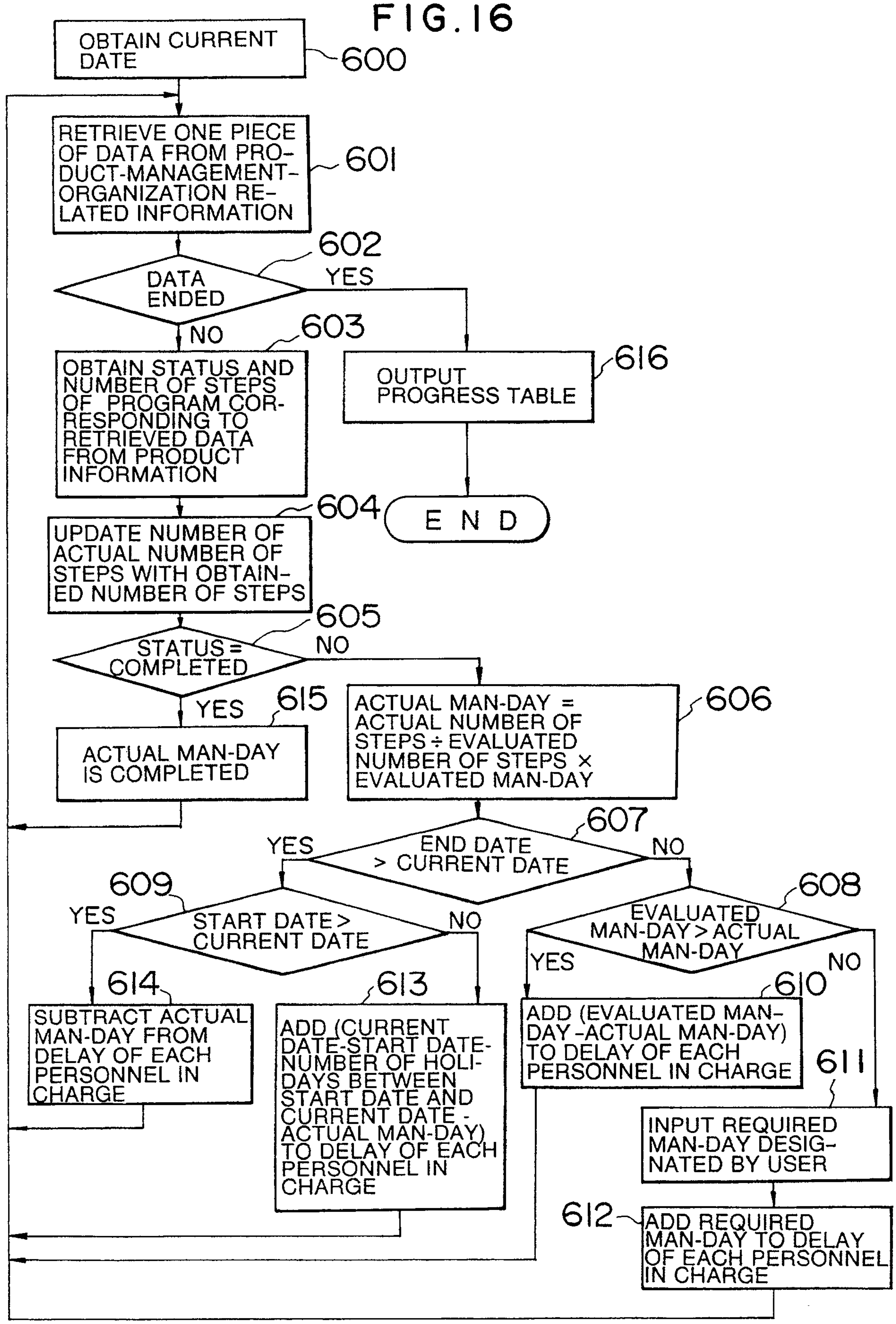
OBTAIN CURRENT DATE
600
RETRIEVE ONE PIECE OF DATA FROM PRODUCT-MANAGEMENT-ORGANIZATION RELATED INFORMATION
601
602
DATA ENDED
YES
NO
603
OBTAIN STATUS AND NUMBER OF STEPS OF PROGRAM CORRESPONDING TO RETRIEVED DATA FROM PRODUCT INFORMATION
OUTPUT PROGRESS TABLE
616
604
END
UPDATE NUMBER OF ACTUAL NUMBER OF STEPS WITH OBTAINED NUMBER OF STEPS
605
STATUS = COMPLETED
NO
YES
615
ACTUAL MAN-DAY IS COMPLETED
ACTUAL MAN-DAY = ACTUAL NUMBER OF STEPS ÷ EVALUATED NUMBER OF STEPS × EVALUATED MAN-DAY
606
607
YES
END DATE > CURRENT DATE
NO
609
608
YES
START DATE > CURRENT DATE
NO
EVALUATED MAN-DAY > ACTUAL MAN-DAY
YES
NO
614
613
610
SUBTRACT ACTUAL MAN-DAY FROM DELAY OF EACH PERSONNEL IN CHARGE
ADD (CURRENT DATE-START DATE-NUMBER OF HOLIDAYS BETWEEN START DATE AND CURRENT DATE - ACTUAL MAN-DAY) TO DELAY OF EACH PERSONNEL IN CHARGE
ADD (EVALUATED MAN-DAY -ACTUAL MAN-DAY) TO DELAY OF EACH PERSONNEL IN CHARGE
611
INPUT REQUIRED MAN-DAY DESIGNATED BY USER
612
ADD REQUIRED MAN-DAY TO DELAY OF EACH PERSONNEL IN CHARGE

FIG.17

20

| PROGRAM NAME | PERSONNEL IN CHARGE | EVALUATED NUMBER OF STEPS | EVALUATED MAN-DAY | START DATE | END DATE | ACTUALLY PERFORMED NUMBER OF STEPS | MAN-DAY |
|---|---|---|---|---|---|---|---|
| DATA DEFINITION PORTION PRODUCTION | HONDA | 500 | 5 | JAN. 10 | JAN. 14 | 500 | ALL |
| RECORD SPECIFICATION PRODUCTION | TANAKA | 500 | 5 | JAN. 10 | JAN. 14 | 400 | 4 |
| SORT | SUZUKI | 300 | 3 | JAN. 10 | JAN. 12 | 200 | 2 |
| SOURCE CHECK | SUZUKI | 1000 | 10 | JAN. 13 | JAN. 25 | 300 | 3 |
| LUMP OF DATA RECORD | TANAKA | 500 | 5 | JAN. 17 | JAN. 21 | 0 | 0 |

FIG.18

| PERSONNEL IN CHARGE | DELAY |
|---|---|
| HONDA | 0 |
| TANAKA | 1 |
| SUZUKI | 0 |

FIG. 19

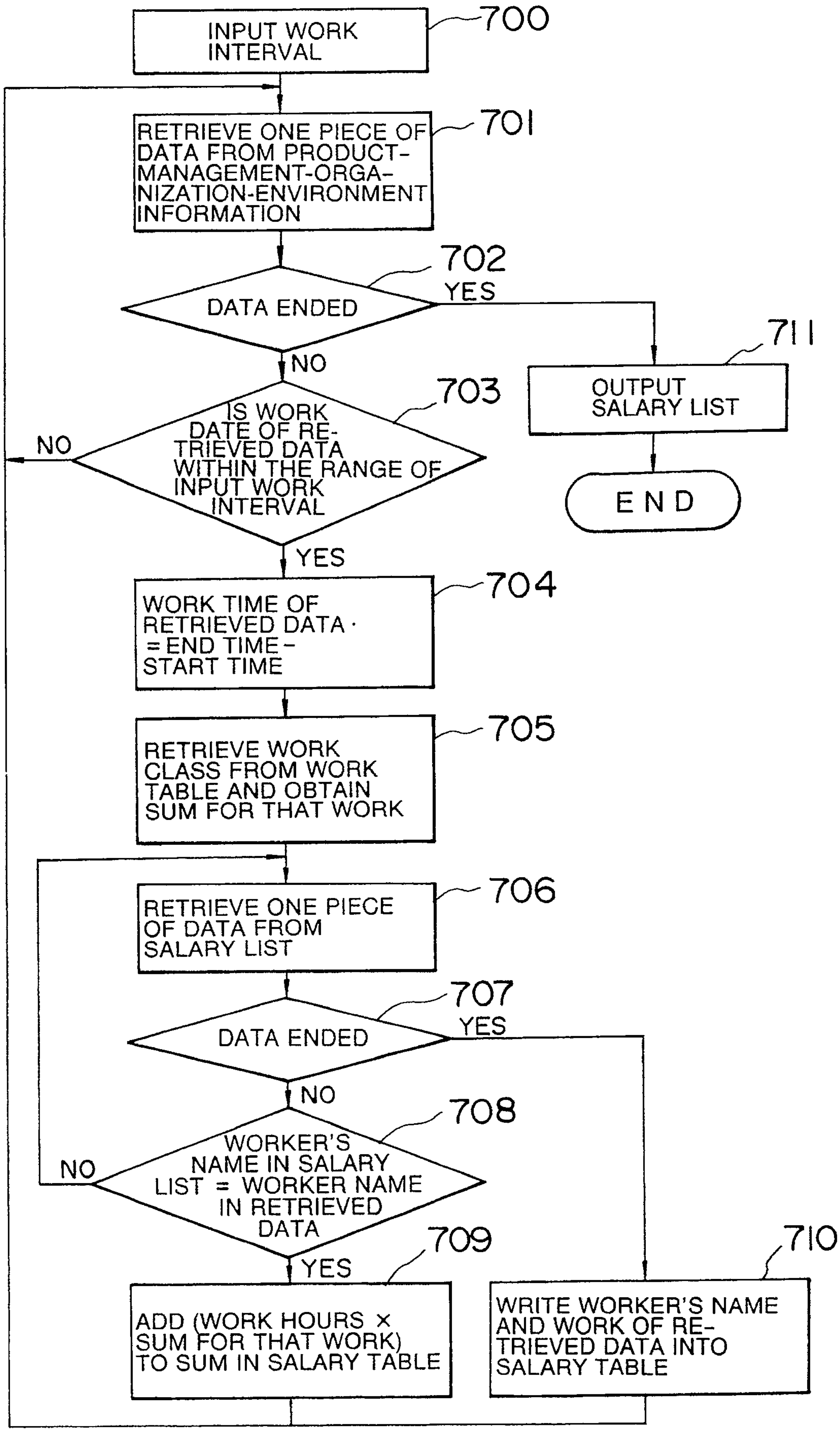

INPUT WORK INTERVAL
700
RETRIEVE ONE PIECE OF DATA FROM PRODUCT-MANAGEMENT-ORGANIZATION-ENVIRONMENT INFORMATION
701
DATA ENDED
702
YES
NO
711
OUTPUT SALARY LIST
END
IS WORK DATE OF RETRIEVED DATA WITHIN THE RANGE OF INPUT WORK INTERVAL
703
NO
YES
WORK TIME OF RETRIEVED DATA = END TIME − START TIME
704
RETRIEVE WORK CLASS FROM WORK TABLE AND OBTAIN SUM FOR THAT WORK
705
RETRIEVE ONE PIECE OF DATA FROM SALARY LIST
706
DATA ENDED
707
YES
NO
WORKER'S NAME IN SALARY LIST = WORKER NAME IN RETRIEVED DATA
708
NO
YES
709
710
ADD (WORK HOURS × SUM FOR THAT WORK) TO SUM IN SALARY TABLE
WRITE WORKER'S NAME AND WORK OF RETRIEVED DATA INTO SALARY TABLE

FIG. 20

22

| WORKER'S NAME | WORK CLASS | WORK START | WORK END | SOURCE PROGRAM NAME | WS |
|---|---|---|---|---|---|
| SUZUKI | CODING | 8:00 JAN.22 | 17:00 JAN.22 | SORT | 3 |
| SUZUKI | CODING | 10:00 JAN.23 | 19:00 JAN.23 | SORT | 3 |
| SUZUKI | TEST DATA PREPARING | 9:00 JAN.24 | 13:00 JAN.24 | SORT | 3 |
| TANAKA | MODULE TEST | 9:00 JAN.23 | 19:00 JAN.23 | MERGE | 4 |
| SATO | DEBUG | 9:00 JAN.25 | 16:00 JAN.25 | GETLINE | 5 |

FIG. 21

30

| WORK CLASS | HOURLY PAY | TOOL |
|---|---|---|
| CODING | 1,000 YEN | VI |
| TEST DATA PREPARING | 900 YEN | VI |
| MODULE TEST | 1,000 YEN | SDB |
| DEBUG | 1,500 YEN | SDB |

FIG. 22

| WORKER'S NAME | SALARY |
|---|---|
| SUZUKI | 190 KYEN |
| TANAKA | 230 KYEN |
| SATO | 180 KYEN |

FIG. 23

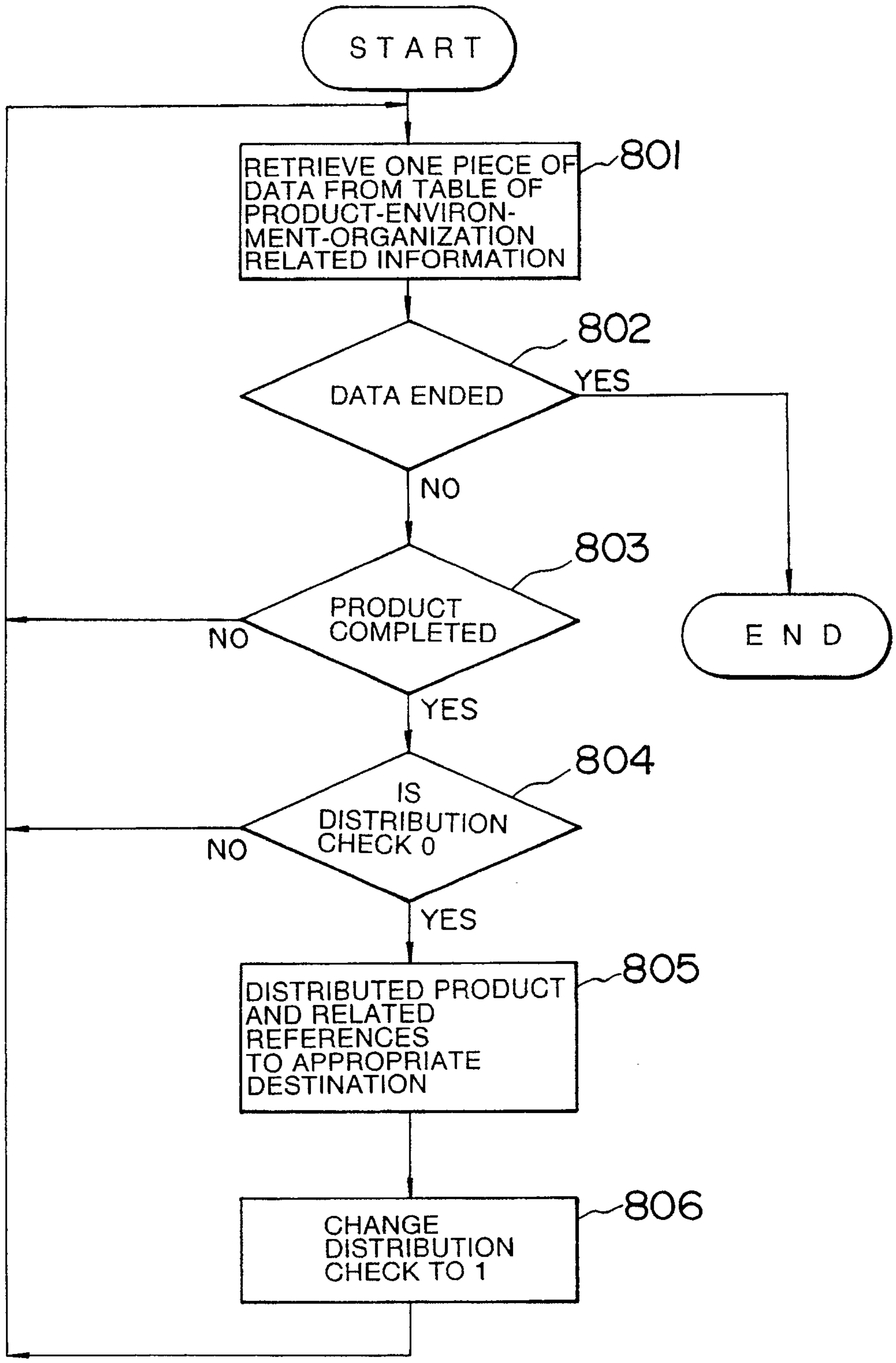
START
RETRIEVE ONE PIECE OF DATA FROM TABLE OF PRODUCT-ENVIRONMENT-ORGANIZATION RELATED INFORMATION
801
DATA ENDED
802
YES
NO
PRODUCT COMPLETED
803
NO
YES
END
IS DISTRIBUTION CHECK 0
804
NO
YES
DISTRIBUTED PRODUCT AND RELATED REFERENCES TO APPROPRIATE DESTINATION
805
CHANGE DISTRIBUTION CHECK TO 1
806

FIG.24

24

| DESTI-NATION | PRODUCT | REFER-ENCE | PRODUCT STATUS | DISTRI-BUTION CHECK |
|---|---|---|---|---|
| SATO | MINUTES ① | COLLECTED ACADEMIC PAPERS | COM-PLETED | O |
| ABE | WS PROPOSAL | "2050" MANUAL | INCOM-PLETE | O |
| WATANABE | DISK DE-SIGN SPECI-FICATIONS | STANDARD TABLE | COM-PLETED | I |
| ABE | MINUTES ② | | COM-PLETED | O |

FIG. 25

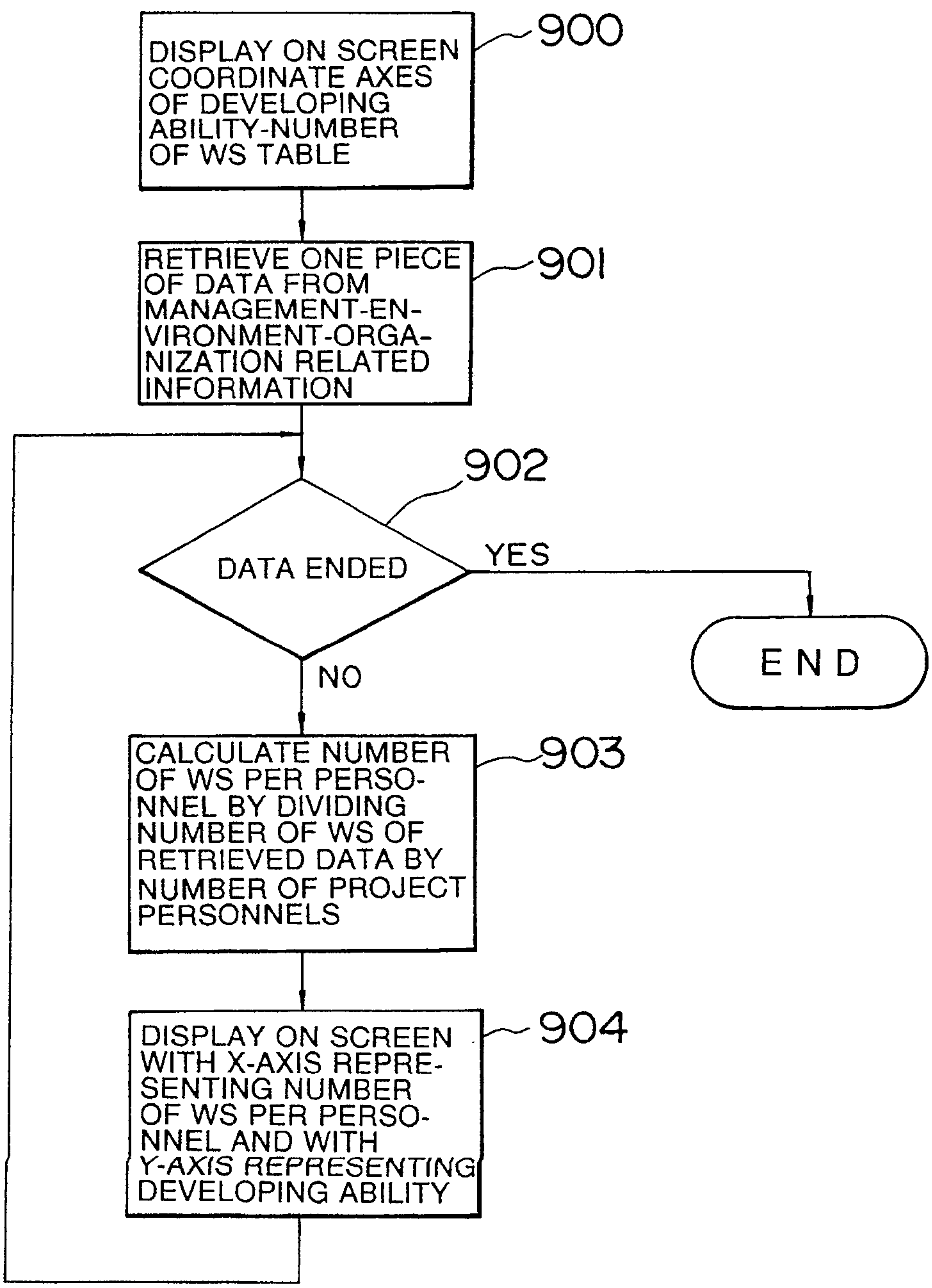
900
DISPLAY ON SCREEN COORDINATE AXES OF DEVELOPING ABILITY-NUMBER OF WS TABLE
901
RETRIEVE ONE PIECE OF DATA FROM MANAGEMENT-EN-VIRONMENT-ORGA-NIZATION RELATED INFORMATION
902
DATA ENDED
YES
END
NO
903
CALCULATE NUMBER OF WS PER PERSO-NNEL BY DIVIDING NUMBER OF WS OF RETRIEVED DATA BY NUMBER OF PROJECT PERSONNELS
904
DISPLAY ON SCREEN WITH X-AXIS REPRE-SENTING NUMBER OF WS PER PERSO-NNEL AND WITH Y-AXIS REPRESENTING DEVELOPING ABILITY

FIG. 26

26

| PROJECT NAME | NUMBER OF PERSONNELS FOR PROJECT | DEVELOPING ABILITY (STEPS/PERSONNEL MONTH) | NUMBER OF WS |
|---|---|---|---|
| 01 | 5 | 500 | 1 |
| 02 | 10 | 750 | 3 |
| 03 | 30 | 1000 | 15 |
| 04 | 25 | 1300 | 20 |
| 05 | 7 | 800 | 3 |
| 06 | 12 | 1200 | 7 |

FIG.27

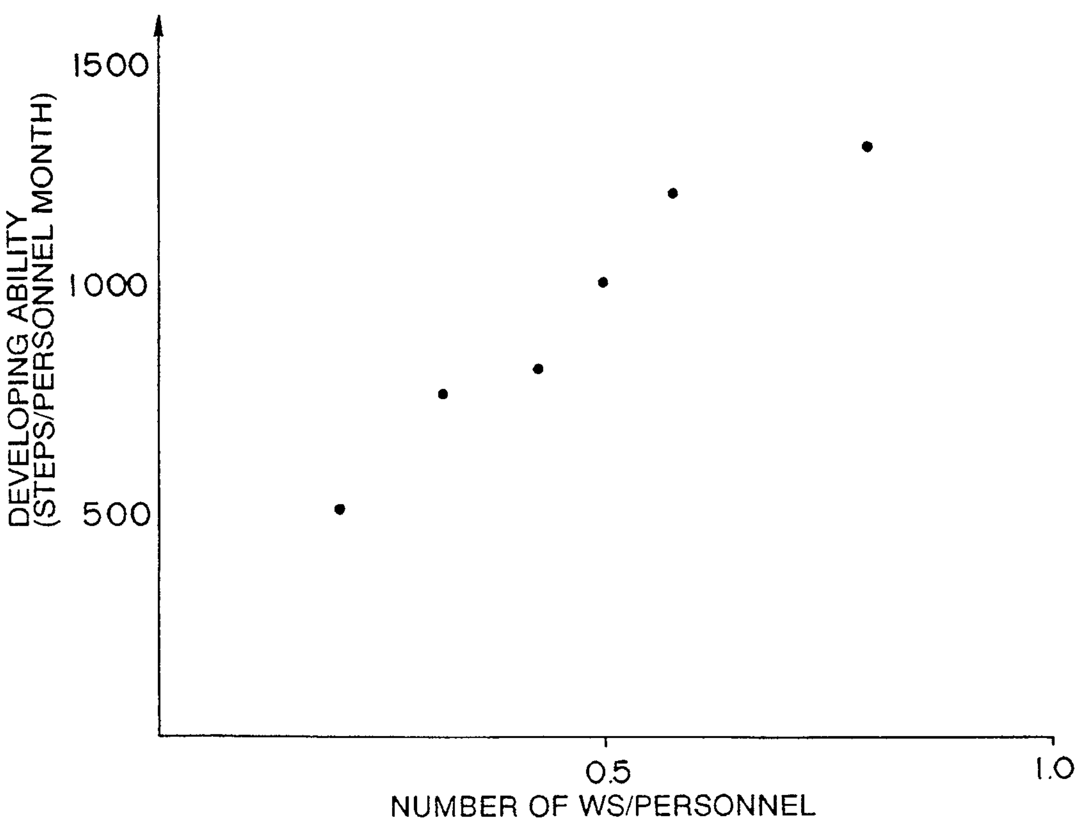

FIG. 28

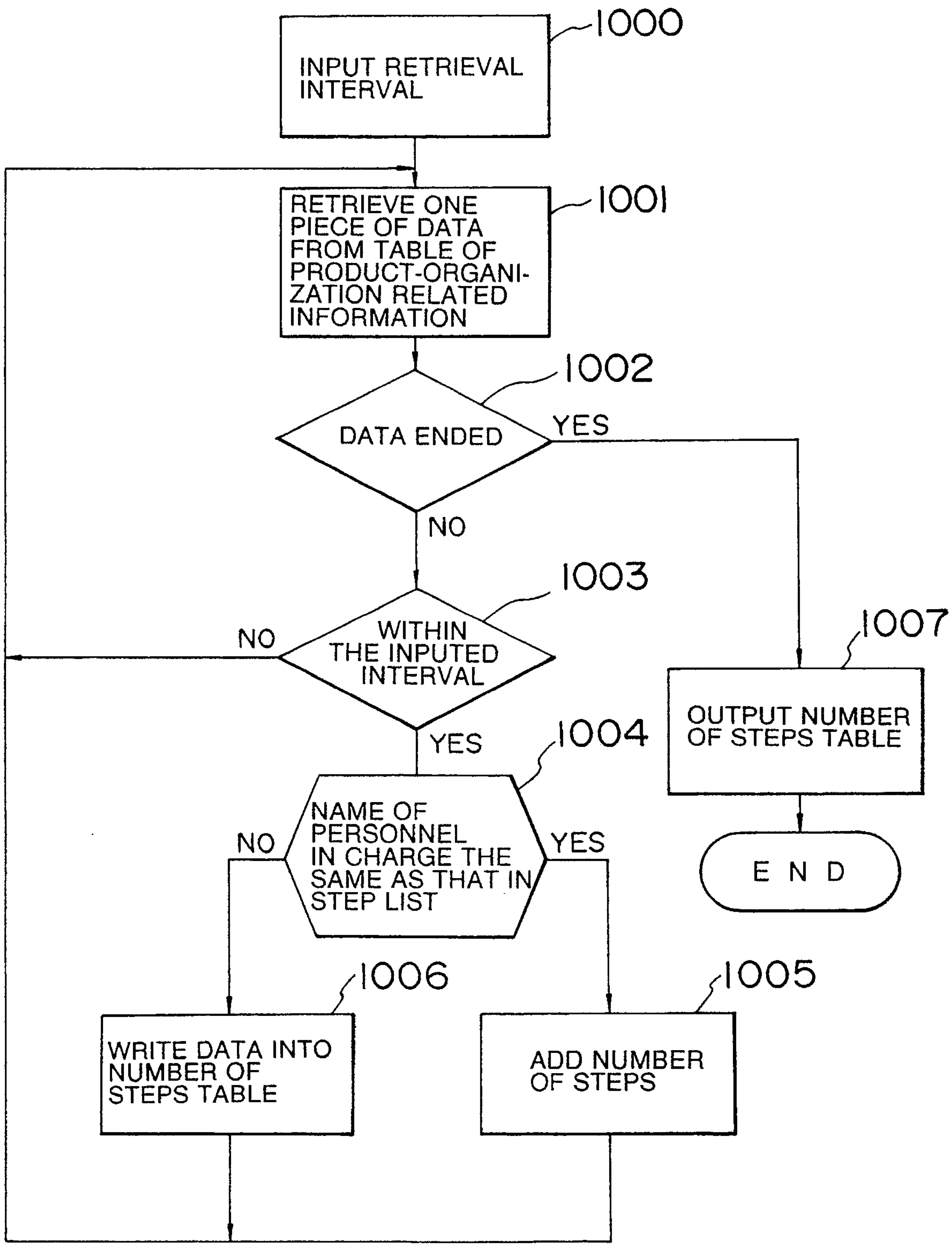
1000
INPUT RETRIEVAL INTERVAL
1001
RETRIEVE ONE PIECE OF DATA FROM TABLE OF PRODUCT-ORGANIZATION RELATED INFORMATION
1002
DATA ENDED
YES
NO
1003
WITHIN THE INPUTED INTERVAL
NO
YES
1004
NAME OF PERSONNEL IN CHARGE THE SAME AS THAT IN STEP LIST
NO
YES
1006
WRITE DATA INTO NUMBER OF STEPS TABLE
1005
ADD NUMBER OF STEPS
1007
OUTPUT NUMBER OF STEPS TABLE
E N D

FIG.29

28

| PERSONNEL IN CHARGE | PROGRAM | NUMBER OF STEPS | WORK START DATE | WORK END DATE |
|---|---|---|---|---|
| SUZUKI | SORT. C | 1800 | 89. 1.10 | 89. 3.10 |
| YAMADA | NETWORK. C | 2000 | 88.10. 3 | 88.11. 1 |
| SUZUKI | ADD.COB | 800 | 89. 3.11 | 89.4 . 1 |
| SATO | MERGE. C | 4200 | 88.12. 1 | 89. 2.19 |

FIG.30

| PERSONNEL IN CHARGE | NUMBER OF STEPS |
|---|---|
| SUZUKI | 2600 |
| SATO | 4200 |

FIG. 31

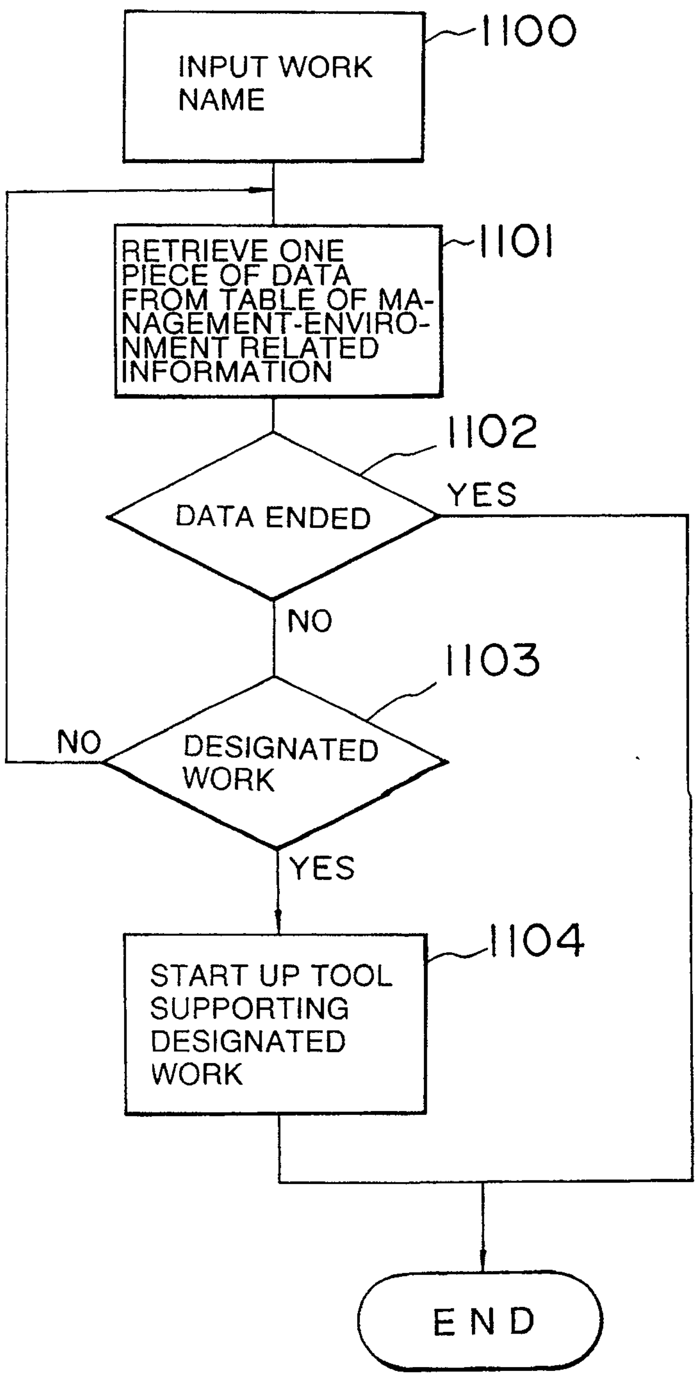
INPUT WORK NAME
1100
RETRIEVE ONE PIECE OF DATA FROM TABLE OF MA-NAGEMENT-ENVIRO-NMENT RELATED INFORMATION
1101
1102
DATA ENDED
YES
NO
1103
NO
DESIGNATED WORK
YES
START UP TOOL SUPPORTING DESIGNATED WORK
1104
END

FIG. 32

30

| WORK NAME | WORK SHEET NAME | TOOL NAME |
|---|---|---|
| DESIGN OF APPLICATION FUNCTION | APPLICATION FUNCTION RELATED DIAGRAM | DATA FLOW EDITOR |
| DEVELOPING INTO COMPUTER PROCESSING | COMPUTER PROCESSING CONFIGURATION DIAGRAM | HIERARCHICAL DIAGRAM EDITOR |
| PREPARING PROCESSING ITEM FLOW | COMPUTER PROCESSED ITEM FLOW | SYSTEM FLOW EDITOR |
| STUDYING DB FORMATION | DB STUDY LIST | WORD PROCESSOR |
| DESIGN OF SUBSTANTIAL STRUCTURE OF DB | SUBSTANTIAL DB STRUCTURE DIAGRAM | ER EDITOR |

FIG. 33

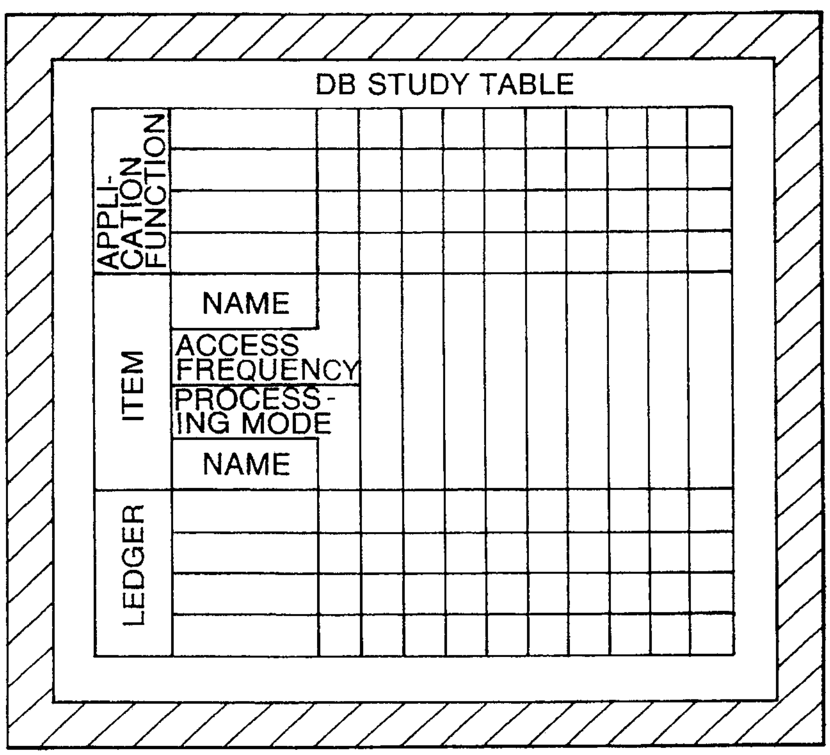

FIG. 34

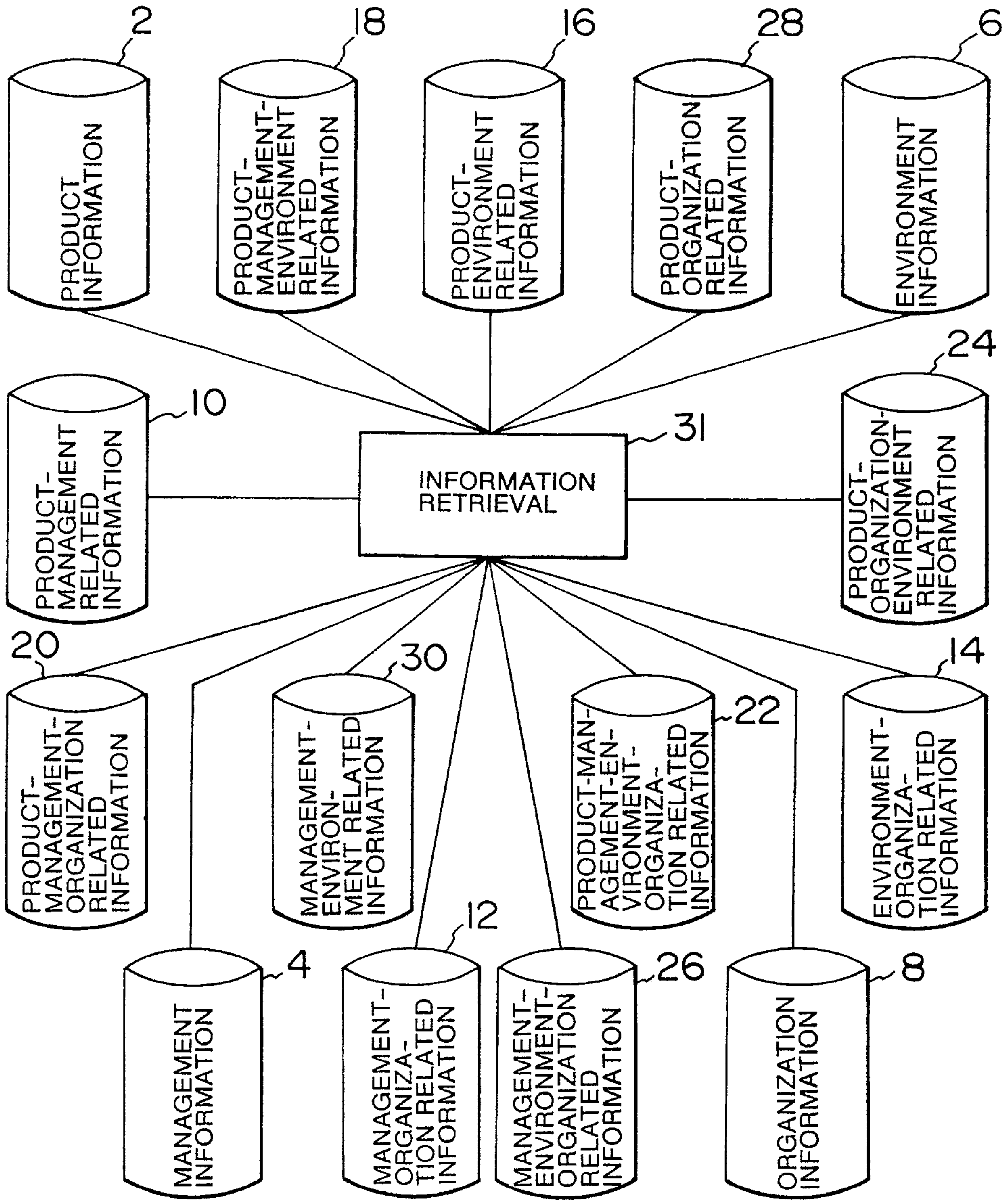
2
PRODUCT INFORMATION
18
PRODUCT-MANAGEMENT-ENVIRONMENT RELATED INFORMATION
16
PRODUCT-ENVIRONMENT RELATED INFORMATION
28
PRODUCT-ORGANIZATION RELATED INFORMATION
6
ENVIRONMENT INFORMATION
10
PRODUCT-MANAGEMENT RELATED INFORMATION
31
INFORMATION RETRIEVAL
24
PRODUCT-ORGANIZATION-ENVIRONMENT RELATED INFORMATION
20
PRODUCT-MANAGEMENT-ORGANIZATION RELATED INFORMATION
30
MANAGEMENT-ENVIRON-MENT RELATED INFORMATION
22
PRODUCT-MAN-AGEMENT-EN-VIRONMENT-ORGANIZA-TION RELATED INFORMATION
14
ENVIRONMENT-ORGANIZA-TION RELATED INFORMATION
4
MANAGEMENT INFORMATION
12
MANAGEMENT-ORGANIZA-TION RELATED INFORMATION
26
MANAGEMENT-ENVIRONMENT-ORGANIZATION RELATED INFORMATION
8
ORGANIZATION INFORMATION

FIG. 35

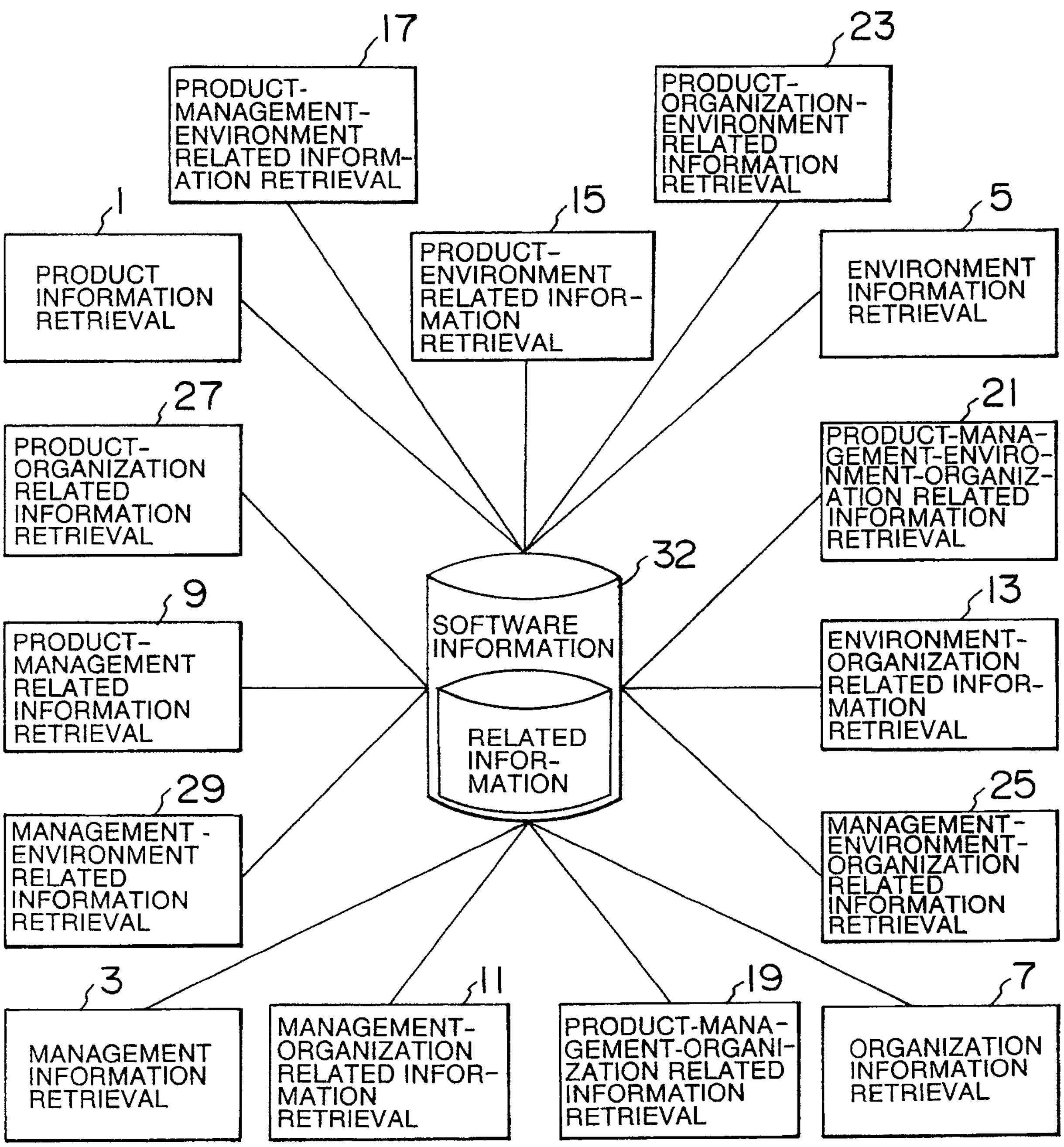
17
PRODUCT-MANAGEMENT-ENVIRONMENT RELATED INFORMATION RETRIEVAL
23
PRODUCT-ORGANIZATION-ENVIRONMENT RELATED INFORMATION RETRIEVAL
1
PRODUCT INFORMATION RETRIEVAL
15
PRODUCT-ENVIRONMENT RELATED INFORMATION RETRIEVAL
5
ENVIRONMENT INFORMATION RETRIEVAL
27
PRODUCT-ORGANIZATION RELATED INFORMATION RETRIEVAL
21
PRODUCT-MANAGEMENT-ENVIRONMENT-ORGANIZATION RELATED INFORMATION RETRIEVAL
32
SOFTWARE INFORMATION
RELATED INFORMATION
9
PRODUCT-MANAGEMENT RELATED INFORMATION RETRIEVAL
13
ENVIRONMENT-ORGANIZATION RELATED INFORMATION RETRIEVAL
29
MANAGEMENT-ENVIRONMENT RELATED INFORMATION RETRIEVAL
25
MANAGEMENT-ENVIRONMENT-ORGANIZATION RELATED INFORMATION RETRIEVAL
3
MANAGEMENT INFORMATION RETRIEVAL
11
MANAGEMENT-ORGANIZATION RELATED INFORMATION RETRIEVAL
19
PRODUCT-MANAGEMENT-ORGANIZATION RELATED INFORMATION RETRIEVAL
7
ORGANIZATION INFORMATION RETRIEVAL

FIG. 36

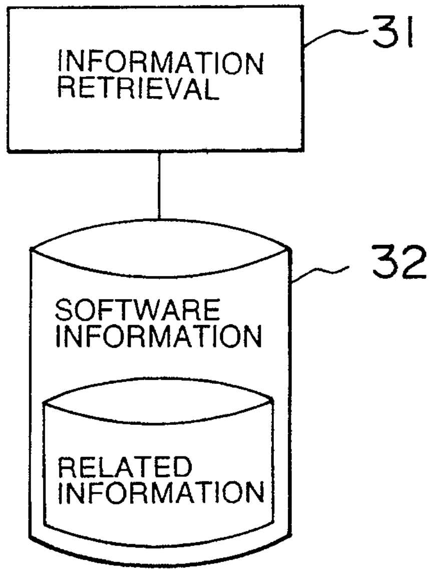
INFORMATION RETRIEVAL
31
32
SOFTWARE INFORMATION
RELATED INFORMATION

FIG. 37

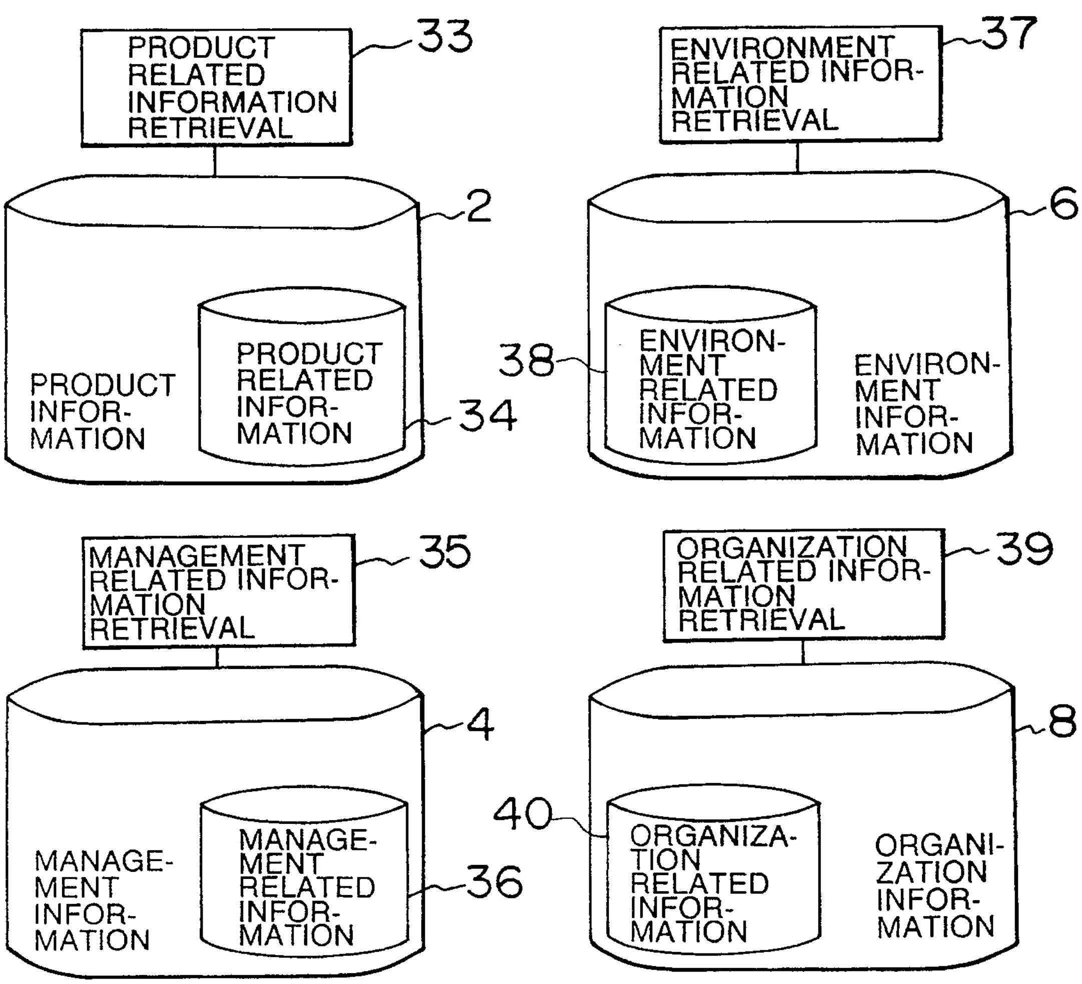
PRODUCT RELATED INFORMATION RETRIEVAL
33
2
PRODUCT INFOR-MATION
PRODUCT RELATED INFOR-MATION
34
ENVIRONMENT RELATED INFOR-MATION RETRIEVAL
37
6
38
ENVIRON-MENT RELATED INFOR-MATION
ENVIRON-MENT INFOR-MATION
MANAGEMENT RELATED INFOR-MATION RETRIEVAL
35
4
MANAGE-MENT INFOR-MATION
MANAGE-MENT RELATED INFOR-MATION
36
ORGANIZATION RELATED INFOR-MATION RETRIEVAL
39
8
40
ORGANIZA-TION RELATED INFOR-MATION
ORGANI-ZATION INFOR-MATION

FIG. 38

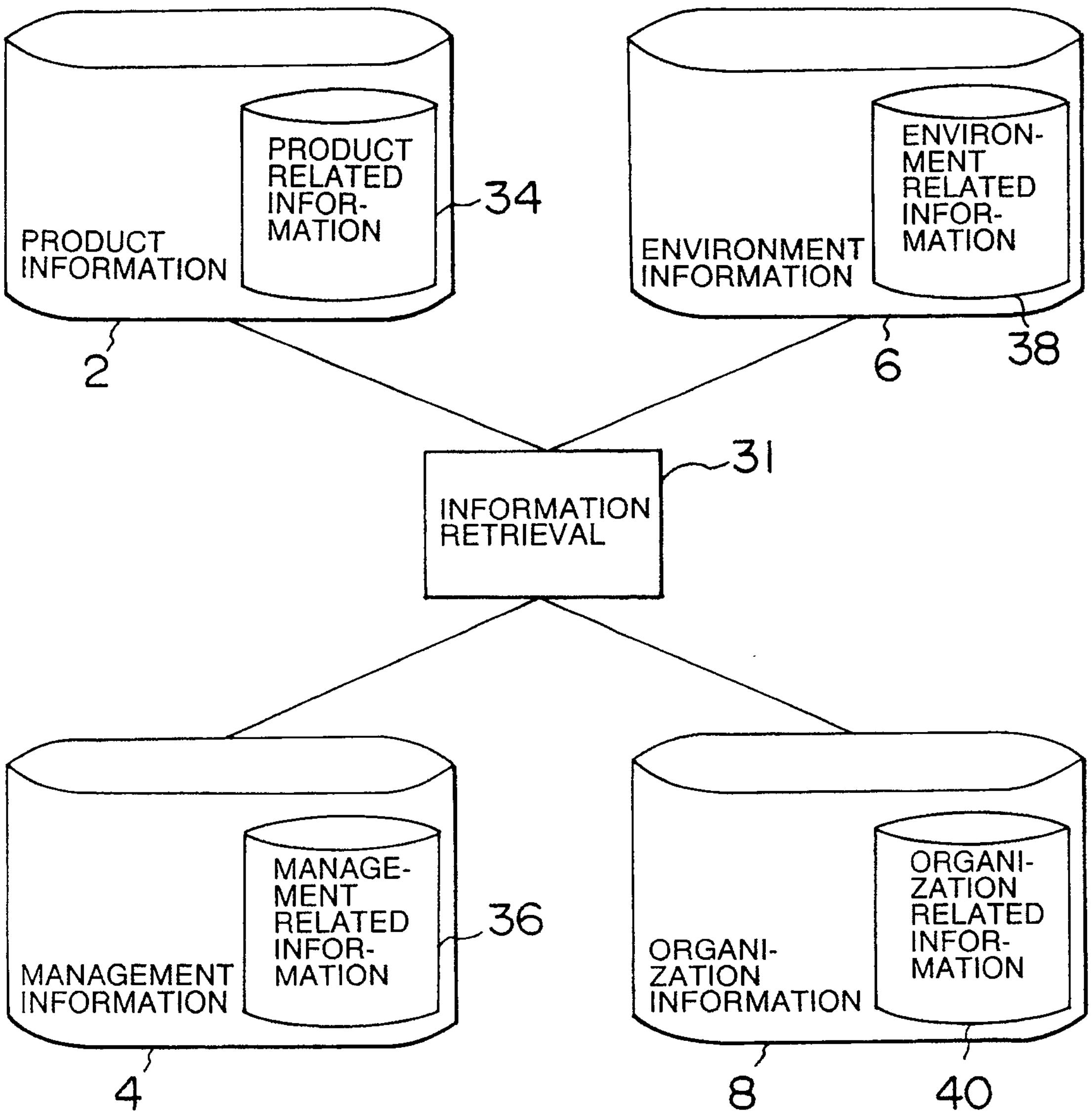
PRODUCT INFORMATION
PRODUCT RELATED INFOR-MATION
34
2
ENVIRONMENT INFORMATION
ENVIRON-MENT RELATED INFOR-MATION
6
38
INFORMATION RETRIEVAL
31
MANAGEMENT INFORMATION
MANAGE-MENT RELATED INFOR-MATION
36
4
ORGANI-ZATION INFORMATION
ORGANI-ZATION RELATED INFOR-MATION
8
40

FIG. 39

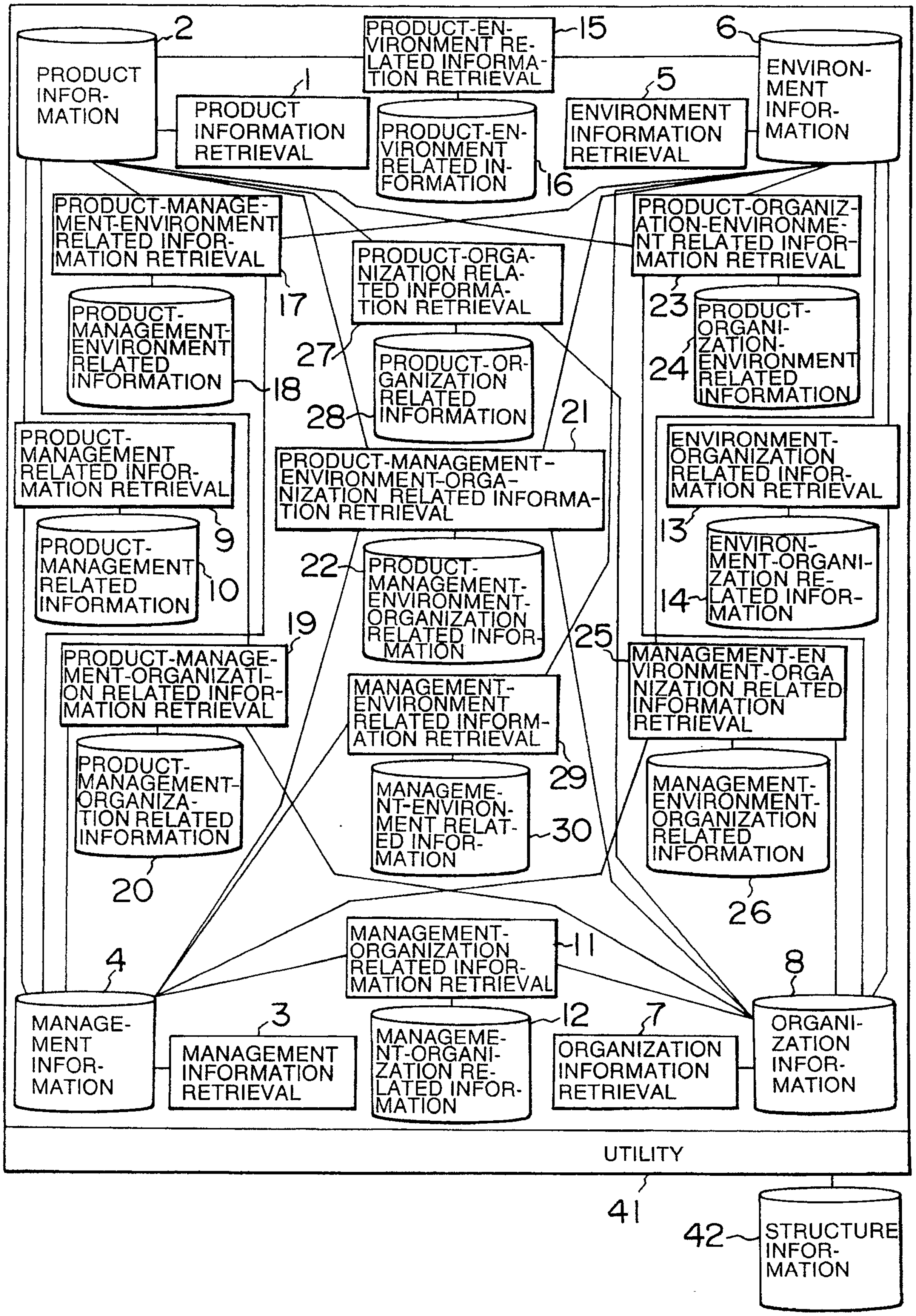
PRODUCT INFORMATION
2
PRODUCT-ENVIRONMENT RELATED INFORMATION RETRIEVAL
15
6
ENVIRONMENT INFORMATION
PRODUCT INFORMATION RETRIEVAL
1
PRODUCT-ENVIRONMENT RELATED INFORMATION
16
ENVIRONMENT INFORMATION RETRIEVAL
5
PRODUCT-MANAGEMENT-ENVIRONMENT RELATED INFORMATION RETRIEVAL
17
PRODUCT-ORGANIZATION-ENVIRONMENT RELATED INFORMATION RETRIEVAL
23
PRODUCT-ORGANIZATION RELATED INFORMATION RETRIEVAL
27
PRODUCT-MANAGEMENT-ENVIRONMENT RELATED INFORMATION
18
PRODUCT-ORGANIZATION RELATED INFORMATION
28
PRODUCT-ORGANIZATION-ENVIRONMENT RELATED INFORMATION
24
21
PRODUCT-MANAGEMENT RELATED INFORMATION RETRIEVAL
9
PRODUCT-MANAGEMENT-ENVIRONMENT-ORGANIZATION RELATED INFORMATION RETRIEVAL
ENVIRONMENT-ORGANIZATION RELATED INFORMATION RETRIEVAL
13
PRODUCT-MANAGEMENT RELATED INFORMATION
10
22
PRODUCT-MANAGEMENT-ENVIRONMENT-ORGANIZATION RELATED INFORMATION
ENVIRONMENT-ORGANIZATION RELATED INFORMATION
14
19
25
PRODUCT-MANAGEMENT-ORGANIZATION RELATED INFORMATION RETRIEVAL
MANAGEMENT-ENVIRONMENT RELATED INFORMATION RETRIEVAL
MANAGEMENT-ENVIRONMENT-ORGANIZATION RELATED INFORMATION RETRIEVAL
29
PRODUCT-MANAGEMENT-ORGANIZATION RELATED INFORMATION
MANAGEMENT-ENVIRONMENT RELATED INFORMATION
30
MANAGEMENT-ENVIRONMENT-ORGANIZATION RELATED INFORMATION
20
26
MANAGEMENT-ORGANIZATION RELATED INFORMATION RETRIEVAL
11
4
8
MANAGEMENT INFORMATION
3
MANAGEMENT INFORMATION RETRIEVAL
MANAGEMENT-ORGANIZATION RELATED INFORMATION
12
7
ORGANIZATION INFORMATION RETRIEVAL
ORGANIZATION INFORMATION
UTILITY
41
42
STRUCTURE INFORMATION